(19) Europäisches Patentamt
European Patent Office
Office européen des brevets

(11) **EP 1 772 915 B1**

(12) **EUROPEAN PATENT SPECIFICATION**

(45) Date of publication and mention
of the grant of the patent:
**10.04.2013 Bulletin 2013/15**

(21) Application number: **05751033.1**

(22) Date of filing: **06.06.2005**

(51) Int Cl.:
*H01M 4/13* (2010.01)    *H01M 4/38* (2006.01)
*H01M 4/58* (2010.01)    *H01M 10/052* (2010.01)
*H01M 10/056* (2010.01)    *C01B 33/12* (2006.01)

(86) International application number:
**PCT/JP2005/010344**

(87) International publication number:
**WO 2005/124897 (29.12.2005 Gazette 2005/52)**

(54) **NONAQUEOUS ELECTROLYTE SECONDARY BATTERY AND NEGATIVE ELECTRODE THEREOF**

SEKUNDÄRBATTERIE MIT WASSERFREIEM ELEKTROLYT UND NEGATIVELEKTRODE DAFÜR

BATTERIE SECONDAIRE A ELECTROLYTE NON AQUEUX ET SA CATHODE

(84) Designated Contracting States:
**AT BE BG CH CY CZ DE DK EE ES FI FR GB GR HU IE IS IT LI LT LU MC NL PL PT RO SE SI SK TR**

(30) Priority: **15.06.2004   JP 2004177153**
**23.08.2004   JP 2004242578**
**30.09.2004   JP 2004286444**

(43) Date of publication of application:
**11.04.2007   Bulletin 2007/15**

(73) Proprietor: **Mitsubishi Chemical Corporation**
**Chiyoda-ku**
**Tokyo 100-8251 (JP)**

(72) Inventors:
• **MIYAMOTO, Yukihiro, c/o Mitsubishi Chem. Corp.**
**Yokohama-shi, Kanagawa 227-8502 (JP)**
• **MIYAKE, Masao, c/o Mitsubishi Chem. Group**
**Science**
**Inashiki-gun, Ibaraki 300-0332 (JP)**
• **FUSE, Tooru, c/o Mitsubishi Chem. Group**
**Science**
**Inashiki-gun, Ibaraki 300-0332 (JP)**
• **SATOU, Tomohiro, Mitsubishi Chem. Group**
**Science**
**Inashiki-gun, Ibaraki 300-0332 (JP)**
• **ARITA, Youji, c/o Mitsubishi Chem. Group**
**Science**
**Aoba-ku, Yokohama-shi, Kanagawa 227-8502 (JP)**

(74) Representative: **HOFFMANN EITLE**
**Patent- und Rechtsanwälte**
**Arabellastrasse 4**
**81925 München (DE)**

(56) References cited:
JP-A- 7 302 588      JP-A- 8 138 744
JP-A- 8 259 213      JP-A- 11 135 115
JP-A- 2000 149 951    JP-A- 2002 356 314
JP-A- 2003 007 295    JP-A- 2005 216 601

## Description

Technical Field

The present invention relates to negative electrodes for a nonaqueous electrolyte secondary battery, and methods' of producing the same. It also relates to nonaqueous electrolyte secondary batteries using the negative electrodes for a nonaqueous electrolyte secondary battery.

Background Art

Nonaqueous solvent lithium secondary batteries have received attention, because they exhibit higher energy densities than nickel-cadmium batteries and nickel metal hydride batteries.

Graphite has been used as a material for a negative electrode of a lithium secondary battery, because graphite is inexpensive and yields a negative electrode having excellent properties in cyclic operation and less expanding. The negative electrode material including graphite, however, has a limitation in geometric capacity of 372 mAh/g and is not expected to have a higher capacity. Accordingly, negative electrodes of alloys typically including silicon (Si), tin (Sn), or aluminum (Al) have been investigated as replacements for graphite negative electrodes, because these elements have large geometric capacities and constitute alloys with lithium. In particular, various attempts have been made to use silicon in negative electrodes, because silicon has a high capacity. Silicon-containing materials for negative electrodes, however, have following disadvantages.

i) Silicon-containing negative electrodes largely expand in volume upon reaction with lithium and tend to induce pulverization of silicon and/or delamination from a current collector. In addition, they are highly reactive with liquid electrolytes and are poor in properties in cyclic operation.

ii) They exhibit increased irreversible capacities accompanied with the reaction with liquid electrolytes. This consumes lithium in an active material for a positive electrode and thereby causes a decreased battery capacity.

iii) They expand and shrink upon occlusion/release of lithium, and this causes pulverization of silicon and/or delamination of the electrode from the current collector. Thus, the resulting batteries may have deteriorated properties in cyclic operation.

iv) The amount of an active material capable of charging/discharging decreases due to the reaction with liquid electrolytes in cyclic operation. Accordingly, the batteries show deteriorated properties in cyclic operation.

v) The expansion of electrode due to occlusion of lithium accumulates during cyclic operation. This causes increase in battery volume, namely, decrease in battery capacity per volume.

Japanese Unexamined Patent Application Publication No. 11-135115 describes that a lithium secondary battery is prepared by depositing, for example, silicon onto a copper foil substrate by vapor deposition or sputtering, so as to yield a lithium secondary battery which has a low electric resistance, shows satisfactory current collecting capability, exhibits a high voltage and a high capacity, and is excellent in charging/discharging properties.

However, it is difficult to suppress the accumulation of expansion of electrode along with charging/discharging operations in such a negative electrode including silicon film deposited by vapor deposition or sputtering. The negative electrode, therefore, has a decreased battery capacity per volume and shows poor properties in cyclic operation.

Japanese Unexamined Patent Application Publication No. 7-302588 mentions that a lithium secondary battery is prepared by configuring a film negative electrode containing a mixture of silicon and carbon contained in atomic level in lithium, or configuring a negative electrode including a lithium sheet combined with SiC, so as to yield a lithium secondary battery which is prevented from the occurrence of dendrites and exhibits a high capacity and excellent properties in cyclic operation.

However, the resulting battery shows insufficient properties in cyclic operation. This is because the negative electrode of the battery has a high lithium content of 70 to 99.9 percent by mole and is thereby liable to react with a liquid electrolyte due to low contents of silicon and carbon, even through it is a negative electrode deposited by plasma CVD using lithium, silicon, and carbon, or is a negative electrode including a lithium sheet combined with SiC particles.

Japanese Unexamined Patent.Application Publication No. 2003-7295 describes that an electrode is prepared by incorporating at least one of the elements of Groups IIIa, IVa, Va, VIa, VIIa, VIII, Ib, and IIb in Periods 4, 5, and 6 in the Periodic Table of Elements into at least a surface of a microcrystalline' or amorphous silicon thin film, so as to yield an electrode having improved properties in cyclic operation. The resulting electrode, however, is liable to accumulate its expansion due to charging/discharging of silicon and is liable to react with a liquid electrolyte. The electrode therefore exhibits insufficiently improved properties in cyclic operation.

PCT International Publication Number WO 01/56099 describes that at least one element selected from carbon (C), oxygen (O), nitrogen (N), argon (Ar), and fluorine (F) is incorporated into a microcrystalline or amorphous silicon thin film so as to provide a lithium secondary battery exhibiting excellent properties in cyclic operation. However, the amount of the added element is small, and the resulting electrode is liable to accumulate its expansion due to charging/discharging of silicon and is liable to react with a liquid electrolyte. The properties in cyclic operation are therefore insufficiently improved.

Japanese Unexamined Patent Application Publication No. 8-138744 describes the use of particles of a boride $SiB_n$, wherein n is 3.2 to 6.6, as a negative electrode so as to provide a lithium secondary battery which is safe and exhibits a high capacity and a high voltage. The resulting secondary battery, however, is not expected to have a higher capacity, because the negative electrode contains a high content of boron (B). In addition, the deterioration of properties in cyclic operation is not sufficiently improved, because the active material is in the form of particles, and the silicon moiety expands and shrinks during cyclic operation, which often invites breakage of breakage of a conduction path with a current collector.

Disclosure of Invention

Accordingly, an object of the present invention is to provide a negative electrode for a nonaqueous electrolyte secondary battery that exhibits a high discharging capacity and a high charging/discharging efficiency in the initial stage and during cyclic operation and is excellent in properties in cyclic operation, which electrode less expands after cyclic operation. Another object of the present invention is to provide a method of producing the same and to provide a nonaqueous electrolyte secondary battery using the negative electrode for a nonaqueous electrolyte secondary battery.

Specifically, the present invention provides, in a first aspect, a negative electrode for a nonaqueous electrolyte secondary battery as defined in claims 1 to 15, which includes an active material thin film, which active material thin film mainly contains a compound of a phase including an element Z lying in a nonequilibrium state in silicon. The compound is represented by a general formula $SiZ_xM_y$, wherein Z, M, "x" and "y" satisfy the conditions as defined in claims 1 to 15.

In a second aspect, the present invention provides a nonaqueous electrolyte secondary battery including the negative electrode according to the first aspect.

The present invention further provides, in a third aspect, a method of producing a negative electrode for a nonaqueous electrolyte secondary battery, in which the secondary battery includes a current collector and an active material thin film arranged adjacent to the current collector, and the active material thin film mainly contains a compound represented by a general formula $SiZ_xM_y$, wherein Z, M, "x" and "y" satisfy the conditions as defined in claims 16 to 18.

Brief Description of the Drawings

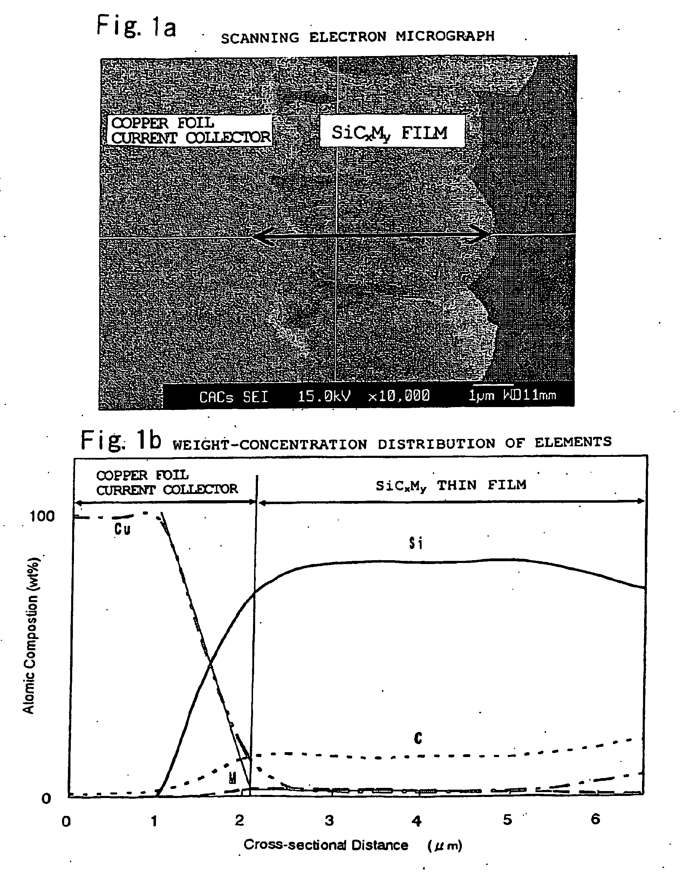

[Fig. 1] Figures. 1a and 1b are a scanning electron micrograph (SEM) and a graph showing a weight concentration distribution, respectively, of a film negative electrode prepared according to Example 1, in which the weight concentration distribution is determined by electron probe microanalysis (EPMA) while setting the total sum of elements in a film thickness direction as 100%.

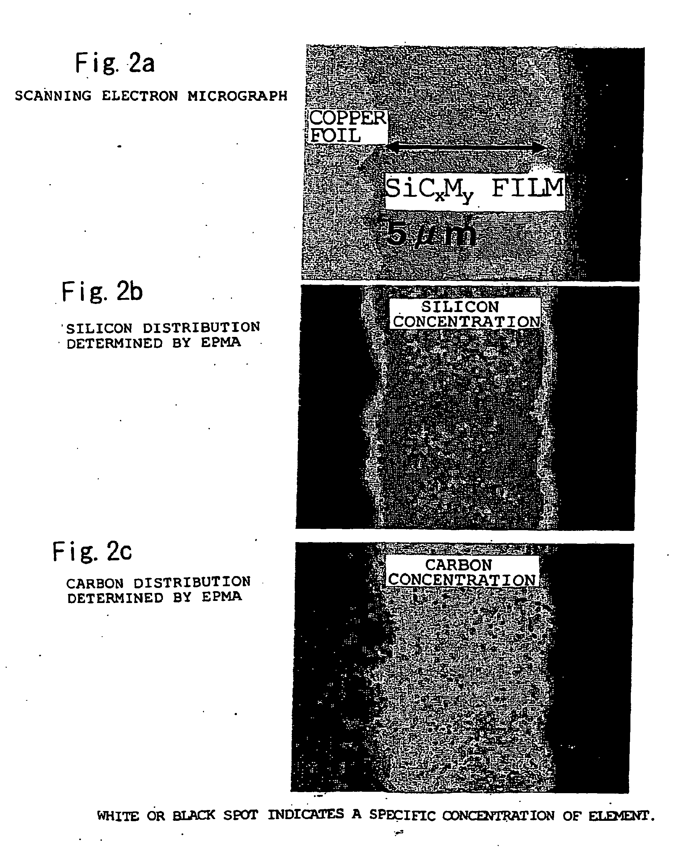

[Fig. 2] Figures. 2a, 2b, and 2c show a scanning electron micrograph (SEM), a distribution chart of silicon, and a distribution chart of carbon, respectively, of the film negative electrode prepared according to Example 1, in which the silicon and carbon distributions are determined by electron probe microanalysis (EPMA).

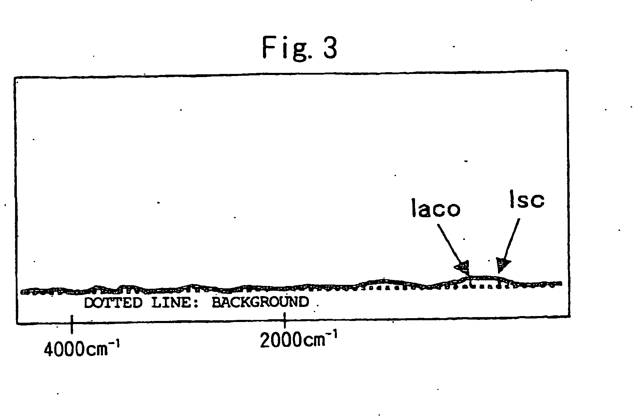

[Fig. 3] Figure. 3 is a schematic view of data in determination of infrared ray transmission of an active material thin film of the film negative electrode prepared according to Example 1.

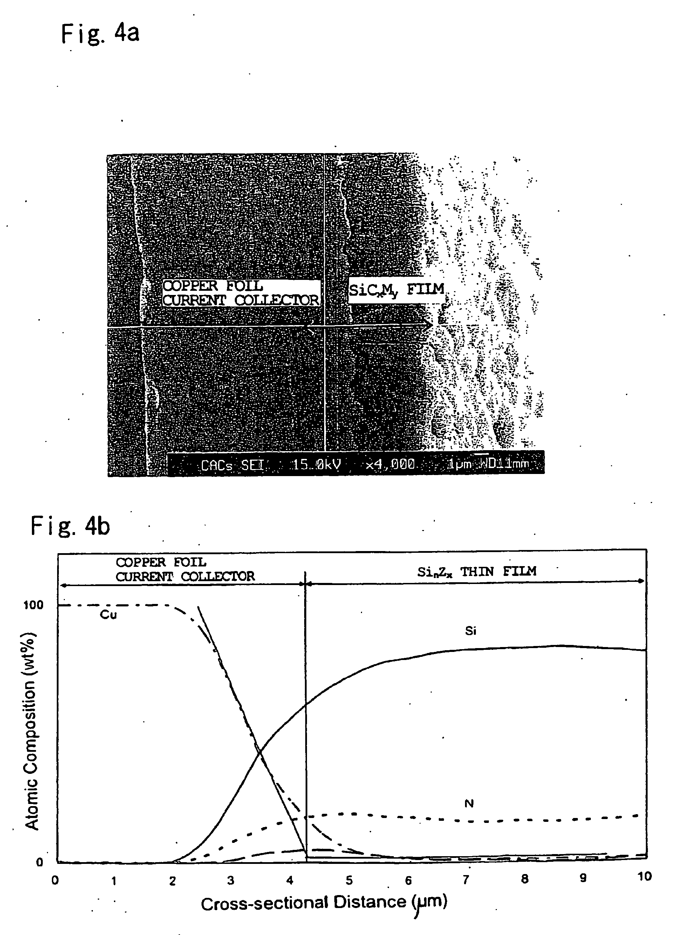

[Fig. 4] Figures. 4a and 4b are a scanning electron micrograph (SEM) and a graph showing a weight concentration distribution of elements, respectively, of a film negative electrode prepared according to Example 6, in which the weight concentration distribution is determined by electron probe microanalysis (EPMA) while setting the total sum of elements in a film thickness direction as 100%.

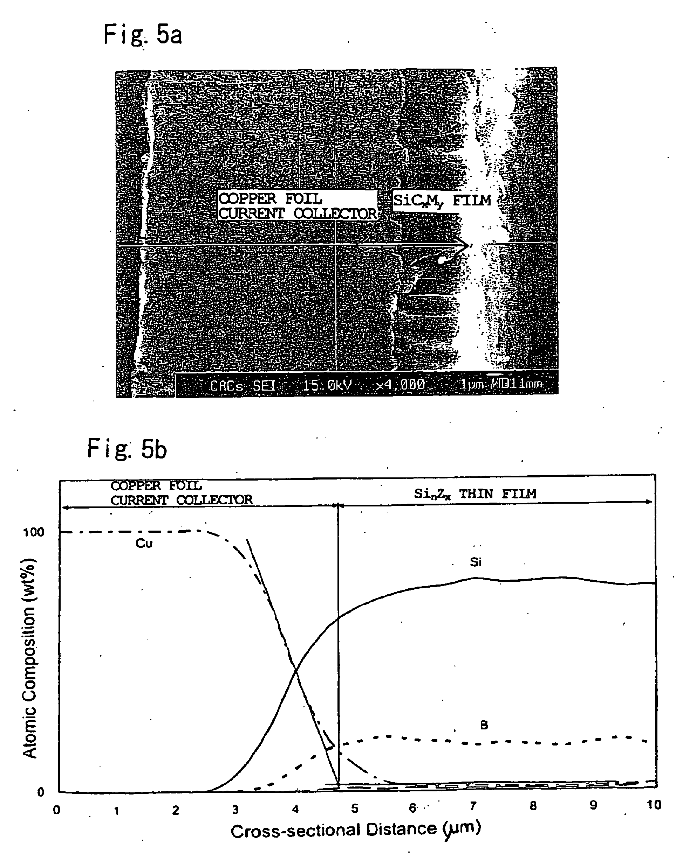

[Fig. 5] Figures. 5a and 5b are a scanning electron micrograph (SEM) and a graph showing a weight concentration distribution of elements, respectively, of a film negative electrode prepared according to Example 10, in which the weight concentration distribution is determined by electron probe microanalysis (EPMA) while setting the total sum of elements in a film thickness direction as 100%.

Detailed Description of the Preferred Embodiments

When a film is deposited from silicon containing at least one element Z, in which the element Z is selected from the group consisting of boron, carbon, and nitrogen and lies in a non-equilibrium state in a concentration within a specific range in silicon, the resulting film contains no or only a trace amount of, for example, a compound $Si_aZ_p$ having a composition closest to silicon and being present in equilibrium wherein "a" and "p" are integers. Silicon containing the element Z has a low activity and is less reactive with a liquid electrolyte. A film negative electrode including the silicon containing the element Z less expands after cyclic operation. A nonaqueous electrolyte secondary battery including this negative electrode exhibits a high discharging capacity and a high charging/discharging efficiency in the initial stage and during cyclic operation and is excellent in properties in cyclic operation.

Activity will be described below.

An activity is a kind of thermodynamic concentration. The value $a_i$ as defined according to the following equation is referred to as the activity.

$$\mu_i - \mu_i^0 = RT \log a_i$$

wherein $\mu_i$ is the chemical potential of a component "i"; and $\mu_i^0$ is the chemical potential of a pure substance in a multicomponent system containing amounts of substances $n_1$, $n_2$, ....

The ratio "$\gamma i$" of the activity "ai" to the concentration "ci" is referred to as a activity coefficient:

$$ai/ci = \gamma i$$

When a system including a solvent and a solute is assumed to be a thermodynamic solution, the activity coefficient is a quantity corresponding to the difference between the chemical potential of a component, assuming that the system is an ideal solution, and the real chemical potential of the component, assuming that the system is a real solution. In the case of a real solution containing a component "i" as a solute, the system approaches an ideal solution containing the component "i" as a solute and the activity coefficient approaches 1 with a decreasing concentration of the solute. In contrast, in the case of a real solution containing a component "i" as a solvent, the system approaches an ideal solution containing the component "i" as a solvent and the activity coefficient approaches 1 with an increasing concentration of the solvent. The ratio $\gamma i$ is less than 1 when the component "i" is more stable in terms of chemical potential in a real solution than in an ideal solution.

The component "i" in the present invention is silicon. When the element Z regarded as a solute is incorporated into silicon regarded as a solvent, the solvent silicon has a decreased activity ai, the ratio $\gamma i$ becomes less than 1, and a silicon compound containing the element Z as a solid solution regarded as a real solution is more stable than silicon regarded as an ideal solution. The reactivity with a liquid electrolyte is suppressed probably for this reason.

However, the activity of silicon is not efficiently decreased, for example, in a compound $Si_aZ_p$ containing silicon and the element Z being present in equilibrium. It is therefore important that the element Z lies in a nonequilibrium state in silicon.

The compound $Si_aZ_p$ having a composition closest to silicon and being present in equilibrium for use in the first aspect can be found in phase diagrams of silicon and the element Z such as "Desk Handbooks Phase Diagrams for Binary Alloys" published by ASM International. The Z-concentration ratio Q(Z) is determined with respect to the Z-concentration (p/(a+p)) of $Si_aZ_p$ so as to define "x" according to the first aspect.

Such a "compound being present in equilibrium" refers to a stoichiometric compound such as a compound $Si_aZ_p$, wherein "a" and "p" are integers, described, for example, in the Diagrams of the phase diagrams. When the element Z is boron, for example, $SiB_3$, $SiB_4$, and $SiB_6$ are known as stoichiometric compounds and are compounds being present in equilibrium. In addition, a mixture of stoichiometric compounds is considered as a compound being preset in equilibrium. Accordingly, $SiB_3$ corresponds to $Si_aZ_p$ relating to the present invention, when the element Z is boron.

When the element Z is carbon, SiC is known as a stable compound. Accordingly, SiC corresponds to $Si_aZ_p$ relating to the present invention, when the element Z is carbon.

When the element Z is nitrogen, $Si_3N_4$ is the most stable compound, but $Si_2N_3$ and SiN are also present as stoichiometric compounds. Accordingly, SiN corresponds to $Si_aZ_p$ relating to the present invention, when the element Z is nitrogen.

A "compound lying in a nonequilibrium state" refers to a compound other than compounds being present in equilibrium. Such a compound lying in a nonequilibrium state does not constitute a specific stoichiometric compound and contains silicon atom and Z atom uniformly dispersed upon macrographic observation.

The negative electrode may include a current collector and the active material thin film, in which the active material thin film is arranged continuously from the current collector.

In the negative electrode, the element Z may be carbon; and "x" may be a number satisfying the following condition: $0.053 \leq x \leq 0.70$ in the general formula $SiZ_xM_y$, and the active material thin film may include the carbon element uniformly distributed in a silicon thin film.

The active material thin film may have a Raman "RC" value of 0.0 or more and 2.0 or less and a Raman "RCS" value of 0.0 or more and 0.25 or less as determined by Raman spectroscopic analysis. The Raman "RS" value may more preferably be 0.40 or more and 0.75 or less.

The Raman "RC", "RSC", and "RS" values of an active material thin film as determined by Raman spectroscopic analysis are determined by Raman spectroscopic analyses according to the following Raman spectrometry methods and are defined as follows, respectively.

[Method for Raman spectrometry]

The measurement is carried out by placing a negative electrode for a sample nonaqueous electrolyte secondary battery according to the present invention in a measurement cell, and determining a Raman spectrum using a Raman spectrograph, such as the "Raman spectrograph" available from JASCO Corporation while irradiating the sample in the cell with argon ion laser light. A background correction of the measured Raman spectrum is carried out so as to determine the Raman "RC", "RSC", and "RS" values. The background correction is carried out by plotting a straight line between the initial and end points of a peak so as to determine a background, and subtracting the background from a peak intensity. Conditions for Raman spectrometry are as follows. Smoothing is carried out as an unweighted average of convolution fifteen points.

Argon ion laser wavelength: 514.5 nm
Laser power on the specimen: 15 to 40 mW
Resolving power: 10 to 20 $cm^{-1}$
Measurement range: 200 $cm^{-1}$ to 1900 $cm^{-1}$

<Raman "RC" value>

The peak intensity "Ic" of a peak "c" occurring at around 1300 $cm^{-1}$ to 1600 $cm^{-1}$ and the peak intensity "Ias" of a peak "as" occurring at around 300 $cm^{-1}$ to 500 $cm^{-1}$ are measured, and the intensity ratio RC (RC = Ic/Ias) of the intensity "Ic" to the intensity "Ias" is calculated. The intensity ratio RC is defined as the Raman "RC" value of the sample film negative electrode.

The peak "c" and the peak "as" are considered to be peaks derived from carbon and silicon, respectively. Accordingly, the Raman "RC" value reflects the quantity of carbon, and a "Raman "RC" value of 2.0 or less" means that little carbon is detected.

<Raman "RSC" value>

The peak intensity "Isc" of a peak "sc" occurring at around 650 $cm^{-1}$ to 850 $cm^{-1}$ and the peak intensity "Ias" of a peak "as" occurring at around 300 $cm^{-1}$ to 500 $cm^{-1}$ are measured, and the intensity ratio "RSC" (RSC = Isc/Ias) to the intensity "Isc" to the intensity "Ias" is calculated. The intensity ratio "RSC" is defined as the Raman "RSC" value of the sample film negative electrode.

The peak "sc" and the peak "as" are considered as peaks derived from SiC and silicon, respectively. The Raman "RSC" value therefore reflects the quantity of SiC, and a "Raman "RCS" value of 0.25 or less" means that little SiC is detected.

<Raman "RS" value>

The intensity "Is" at 520 $cm^{-1}$ and the peak intensity "Ias" of a peak "as" occurring at around 300 $cm^{-1}$ to 500 $cm^{-1}$ are measured, and the intensity ratio "RS" (RS = Is/Ias) of the intensity "Is" to the intensity "Ias" is calculated, and this value is defined as the Raman "RS" value of the sample film negative electrode.

The Raman "RS" value reflects the state of silicon.

In the general formula $SiZ_xM_y$, the element Z may be carbon; the element M may be oxygen; and "x" and "y" may be numbers satisfying the following conditions: $0.053 \leq x \leq 0.70$ and $0 < y \leq 0.50$, respectively.

In the negative electrode for a nonaqueous electrolyte secondary battery, the active material thin film may have an "IRsc" value of 0.9 or more and 3.0 or less as determined by infrared transmission photometric analysis using an infrared spectrophotometer, after carrying out charging/discharging.

The phrase "after carrying out charging/discharging" can be any of the cases after an initial charging/discharging of the assembled battery and after cycles of charging/discharging cyclic operation. In any case, the above-specified "IRsc" value is desirable.

The "IRsc" value of a sample active material thin film as determined by infrared transmission photometric analysis is determined according to the flowing infrared ray transmission measurement using an infrared spectrophotometer and is defined as follows.

[Method for infrared transmission photometric analysis using infrared spectrophotometer]

After carrying out charging/discharging, an active material thin film of a sample negative electrode for a nonaqueous electrolyte secondary battery is peeled off from the current collector, is placed in a measurement cell of an infrared spectrophotometer, such as "Magna 560" available from Thermo Electron Corporation, and a measurement is carried out according to transmission photometry. The measurement is carried out in an inert atmosphere using a sample holder with a diamond window. A background correction of the measured infrared absorption spectrum is conducted, so as to determine the "IRsc" value. The background correction is carried out by plotting a straight line between minimum values at 2000 to 4000 $cm^{-1}$, extending the plotted line to determine a background, and subtracting this background from the respective intensities.

The intensity "Isc" of transmitted light at 1600 $cm^{-1}$ and the intensity Iaco of transmitted light at 1650 $cm^{-1}$ are' measured, and the ratio of intensity "IRsc" (IRsc = Isc/Iaco) of the intensity "Isc" to the intensity Iaco is determined by calculation. This intensity ratio "IRsc" is defined as the "IRsc" value after carrying out charging/discharging.

Although details have not yet been clarified, the intensities "Isc" and Iaco are considered to be based on films derived from silicon and a lithium alkyl carbonate, respectively. Accordingly, the "IRsc" value reflects the state and quantitative ratio of a film (solid electrolyte interface: SEI) in the sample active material thin film. An "IRsc" value of 0.9 or more means that the active material thin film includes a film derived from a lithium alkyl carbonate and a film derived from silicon.

It is acceptable that the element Z is nitrogen in the general formula $SiZ_xM_y$, the compound $Si_aZ_p$ having a composition closest to silicon and being present in equilibrium is SiN, and "x" in the general formula $SiZ_xM_y$ is such a value that the Z-concentration ratio Q(Z) is in the range of 0.15 to 0.85.

The active material thin film may include a silicon thin film and nitrogen element uniformly distributed in the silicon thin film.

The active material thin film may have a Raman "RSN" value of 0.0 or more and 0.9 or less and a Raman "RS" value of 0.4 or more and 1.0 or less, as determined by Raman spectroscopic analysis.

The Raman "RSN" value of an active material thin film as determined by Raman spectroscopic analysis is determined by Raman spectroscopic analysis according to the following method for Raman spectrometry and is defined as follows.

[Method for Raman spectrometry]

The above-mentioned method is used for Raman spectrometry.

<Raman "RSN" value>

The peak intensity "Isn" of a peak "sn" occurring at around 700 $cm^{-1}$ to 1000 $cm^{-1}$ and the peak intensity "Ias" of a peak "as" occurring at around 300 $cm^{-1}$ to 500 $cm^{-1}$ are determined, and the intensity ratio "RSN" (RSN = Isn/Ias) of the intensity "Isn" to the intensity "Ias" is calculated. This ratio is defined as the Raman "RSN" value of the sample film negative electrode.

The peak "sn" and the peak "as" are considered as peaks derived from silicon nitride and silicon, respectively. Accordingly, the Raman "RSN" value reflects the quantity of silicon nitride. A Raman "RSN" value of 0.9 or less means that little silicon nitride is detected.

The active material thin film may have an "XIsz" value of 0.00 or more and 1.10 or less as determined by X-ray diffraction.

The "XIsz" value of an active material thin film as determined by X-ray diffraction is determined by X-ray diffractometry according to the following method for X-ray diffractometry and is defined as follows.

[Method for X-ray diffractometry]

The "XIsz" value of a sample active material thin film in X-ray diffractometry can be determined, for example, by placing a sample film negative electrode according to the present invention in an instrument so that the active material thin film faces an irradiation surface, and carrying out measurement using an X-ray diffractometer, such as "X-ray diffractometer" available from Rigaku Corporation. Conditions for measurement are as mentioned in after-mentioned examples.

The "XIsz" value is defined as follows.

<"XIsz" value>

The peak intensity "Isz" at a main peak angle and the peak intensity "Is" at 2θ of 28.4 degrees of a compound being present in equilibrium, such as $Si_aZ_p$, are measured, and the intensity ratio "XIsz" value of the intensity "Isz" to the intensity "Is" (XIsz = Isz/Is) is determined by calculation. This ratio is defined as the "XIsz" value of the sample active material thin film.

When the element Z is nitrogen, for example, the peaks "Isz" and "Is" at 2θ of 27.1 degrees and 28.4 degrees are considered as peaks derived from $Si_3N_4$ and silicon, respectively. An "XIsz" value of 1.20 or less means that almost no compound $Si_3N_4$ being present in equilibrium is detected.

It is also preferable that the element Z is boron in the general formula $SiZ_xM_y$, the compound $Si_aZ_p$ having a composition closest to silicon and being present in equilibrium is $SiB_3$, and "x" in the general formula $SiB_xM_y$ is such a value that the Z-concentration ratio Q(Z) is in the range of 0.30 to 0.85.

The active material thin film may contain the boron element uniformly distributed in a silicon thin film.

The active material thin film may have an "XIsz" value of 0.00 or more and 0.90 or less as determined by X-ray diffraction.

The definition of the "XIsz" value is as mentioned above. When the element Z is boron, for example, the peaks "Isz" and "Is" at 2θ of 33.4 degrees and 28.4 degrees are considered to be peaks derived from $SiB_4$ and silicon, respectively. An "XIsz" value of 0.90 or less means that almost no compound $SiB_4$ being present in equilibrium is detected.

According to an embodiment of the present invention, there is provided a high-performance nonaqueous electrolyte secondary battery that exhibits a high discharging capacity, a high charging/discharging efficiency in the initial stage and during cyclic operation and is excellent in properties in cyclic operation, and the electrode of which less expands after cyclic operation. The negative electrode for a nonaqueous electrolyte secondary battery and the nonaqueous electrolyte secondary battery can be advantageously used in various fields such as electronic equipment in which nonaqueous electrolyte secondary batteries are used.

A negative electrode for a nonaqueous electrolyte secondary battery according to the present invention is hereinafter also referred to as a "film negative electrode". The negative electrode includes an active material thin film mainly containing a compound of a phase including an element Z lying in a nonequilibrium state in silicon.

The film negative electrode is very useful as a negative electrode in nonaqueous electrolyte secondary batteries, such as lithium secondary batteries, each of which includes a positive electrode, a negative electrode, and an electrolyte, the positive and negative electrodes are each capable of occluding/releasing lithium ion. For example, a nonaqueous electrolyte secondary battery may be configured mainly using the film negative electrode in combination with a metal chalcogenide positive electrode and an organic liquid electrolyte mainly containing a carbonate solvent generally used for a lithium secondary battery. The resulting nonaqueous electrolyte secondary battery exhibits a high capacity, a small irreversible capacity occurring in the early stages of cyclic operation, is excellent in properties in cyclic operation, and the electrode of which less expands after cyclic operation. In addition, the battery is highly stable and reliable in storage at high temperatures and shows very excellent discharging properties with high efficiency and very excellent discharging properties at low temperatures. The film thickness, the elements Z and M, composition, and other parameters of the thin film will be illustrated in detail below.

[Film thickness]

The thickness of the active material thin film is 1 μm or more, preferably 3 μm or more, and 30 μm or less, preferably 20 μm or less, and more preferably 15 μm or less. If the active material thin film has a thickness below this range, film negative electrodes according to the present invention may have a small capacity per one negative electrode, and a large number of negative electrodes may be required to constitute a battery having a large capacity. Consequently, the total volume of necessary positive electrodes, separators, and current collectors of film negative electrodes increases, and this substantially decreases the amount of a negative electrode active material to be used per battery volume. Thus, it may be difficult to provide a battery having a large capacity. In contrast, if the film thickness exceeds the range, the active material thin film may delaminate from the current collector substrate due to expansion/shrinkage upon charging/discharging, and the resulting battery may shows deteriorated properties in cyclic operation.

The active material thin film is preferably deposited from a gaseous phase, as illustrated in after-mentioned production methods.

[Element Z]

The element Z in a compound $SiZ_xM_y$ is at least one element selected from the group consisting of boron, carbon and nitrogen of which carbon and nitrogen elements are preferred. Two or more different elements Z can be used in combination.

Boron, carbon, and nitrogen can constitute compounds having melting points higher than that of silicon. In addition, these elements have covalent radii smaller than that of silicon.
More specifically, boron, carbon, and nitrogen can constitute compounds being present in equilibrium and having melting points higher than silicon. Examples of such compounds are $SiB_6$, $SiC$, $Si_3N_4$. Compounds having high melting points are generally compounds being stable and having negative and large free energy of formation. Accordingly, compounds having high melting points can effectively reduce the activity of silicon and suppress the reactivity with a liquid electrolyte. In addition, boron, carbon, and nitrogen have covalent radii smaller than that of silicon. These elements are therefore resistant to the formation of compounds being present in equilibrium in the $SiZ_xM_y$ compound and effectively act to disperse the element Z more uniformly in a high concentration. They can effectively reduce the activity of silicon and suppress the reactivity with a liquid electrolyte.
If the element Z is copper, nickel, or another element which constitutes a compound being present in equilibrium and having a melting point lower than that of silicon, such as $Cu_3Si$ or $Ni_2Si$, the element may not act effectively to reduce the activity of silicon and to suppress the reactivity with a liquid electrolyte. Consequently, the properties in cyclic operation may not be improved, in contrast to the cases mentioned below.
If the active material thin film mainly contains a compound being present in equilibrium in a $SiZ_xM_y$ compound, the activity of silicon may not be reduced, the reactivity with a liquid electrolyte may not be suppressed, and the properties in cyclic operation may deteriorate, in contrast to the cases mentioned below.
Carbon and nitrogen are more excellent as the element Z than boron is. When the element Z reacts with lithium during charging, carbon and nitrogen probably exhibit less change in volume than boron does and thereby less invite the breakage of a conduction path of silicon.

[Element M]

The element M is at least one of copper, nickel, and oxygen elements, and is more preferably oxygen element.

[Composition]

In the composition of an active material thin film, "x" in $SiZ_xM_y$ is such a value that a Z-concentration ratio Q(Z) is 0.10 or more, preferably 0.15 or more, more preferably 0.30 or more, and particularly preferably 0.40 or more and is 0.95 or less, preferably 0.85 or less, more preferably 0.75 or less, and particularly preferably 0.60 or less. The Z-concentration ratio Q(Z) is calculated with respect to the Z-concentration (p/(a+p)) of a compound $Si_aZ_p$ having a composition closest to silicon and being present in equilibrium, wherein "a" and "p" are integers, according to the following equation:

$$Q(Z) = [x/(1+x)]/[p/(a+p)]$$

If the Z-concentration ratio Q(Z) is below the above-specified range, the activity of silicon may not be effectively reduced, the reactivity with a liquid electrolyte may not be suppressed, and the resulting electrode may expand largely. Thus, it is difficult to obtain preferred properties in cyclic operation. If the Z-concentration ratio Q(Z) exceeds the range, a stable compound being present in equilibrium, such as $Si_aZ_p$, may form. Consequently, the activity of silicon may not be reduced and the reactivity with a liquid electrolyte may not be suppressed even when the element Z is present in an increased amount. A stable compound such as $Si_aZ_p$ has low conductivity. Accordingly, if a compound such as $Si_aZ_p$ is formed, the active material thin film may have decreased conductivity, which makes it difficult to carry out doping/dedoping of lithium. Thus, charging/discharging capability may deteriorate. If the Z-concentration ratio Q(Z) largely exceeds the range, it is difficult to provide a higher capacity due to the presence of silicon, and the resulting battery may not have preferred properties.
When two or more different elements are used in combination as the elements Z, Z-concentration ratios Q(Z) are determined with respect to the Z-concentrations of the two or more elements on the basis of $Si_aZ_p$, and the total of the Z-concentration ratios Q(Z) is regarded as the Z-concentration ratio Q(Z).
The number "y" is 0 or more and is 0.50 or less, preferably 0.30 or less, more preferably 0.15 or less, and particularly preferably 0.10 or less. If "y" exceeds the above-specified range, the element M is present in a large amount, and advantages due to the presence of silicon and the element Z may not be obtained.
However, "y" is preferably equal to zero or nearly equal to zero when the element Z is other than carbon. The phrase "y is nearly equal to zero" used herein refers to, for example, the case where the element M is contained as inevitable impurities typically during film-deposition processes of an active material thin film for use in the present invention. In this case, "y" is, for example, less than 0.08.

The composition of an active material thin film can be determined, for example, in the following manner, as described in Examples mentioned below. A sample film negative electrode is placed on a specimen support so that an active material thin film faces upward and lies in flat horizontally. Next, depth profiling is carried out using the $K\alpha$ ray of aluminum as an X-ray source while carrying out argon (Ar) sputtering. The depth profiling is conducted using an X-ray photoelectron spectrometer, such as the "ESCA" available from ULVAC-PHI, Inc. The atomic concentrations of silicon, the element Z, and the element M are determined by calculation to thereby determine the composition.

<Composition in the case of the element Z being carbon>

When the element Z is carbon, the Z-concentration ratio Q(Z) (hereinafter also referred to as "carbon-concentration ratio Q(C)") is generally 0.10, preferably 0.113 or more, and more preferably 0.182 or more and is generally 0.824 or less, and preferably 0.667 or less. When the element Z is carbon, the compound having a composition closest to silicon and being present in equilibrium is SiC.

The above-specified carbon-concentration ratio Q(C) corresponds to such a value that "x" in $SiC_xM_y$ is generally 0.053 or more, preferably 0.06 or more, and more preferably 0.10 or more and is generally 0.70 or less, and preferably 0.50 or less.

If the carbon-concentration ratio Q(C) is below the above-specified range, the activity of silicon may not be effectively reduced, the reactivity with a liquid electrolyte may not be suppressed, and the resulting electrode may expand largely. Thus, it is difficult to obtain preferred properties in cyclic operation. If the carbon-concentration ratio Q(C) exceeds the range, carbon may constitute a stable compound SiC being present in equilibrium. The resulting active material thin film may have decreased conductivity, which makes it difficult to carry out doping/dedoping of lithium. Thus, charging/discharging capability may deteriorate.

When the element Z is carbon, "y" in the general formula $SiC_xM_y$ is generally 0 or more and is generally 0.70 or less, preferably 0.50 or less, and more preferably 0.30 or less. If "y" exceeds this range, the element M is present in a large amount, and advantages due to the presence of silicon and carbon may not be effectively exhibited.

When the element Z is carbon and the element M is oxygen, "y" in the general formula $SiC_xO_y$ is generally more than 0 and is generally 0.50 or less, preferably 0.30 or less, more preferably 0.15 or less, and particularly preferably 0.10 or less. If "y" exceeds this range, oxygen is present in a large amount, which may invite deterioration in discharging capacity and charging/discharging efficiency in early stages.

<Composition in the case of the element Z being nitrogen>

When the element Z is nitrogen, the Z-concentration ratio Q(Z) (hereinafter also referred to as "nitrogen-concentration ratio Q(N)") is generally 0.15 or more, preferably 0.30 or more, and more preferably 0.40 or more and is generally 0.85 or less, preferably 0.70 or less, and more preferably 0.60 or less. When the element Z is nitrogen, the compound having a composition closest to silicon and being present in equilibrium is SiN.

If the nitrogen-concentration ratio Q(N) is below the above-specified range, the activity of silicon may not be effectively reduced, the reactivity with a liquid electrolyte may not be suppressed, and the resulting electrode may expand largely. Thus, it is difficult to obtain preferred properties in cyclic operation. If the nitrogen-concentration ratio Q(N) exceeds the range, nitrogen constitutes a stable compound $Si_3N_4$ being present in equilibrium. The active material thin film may thereby have decreased conductivity, which makes it difficult to carry out doping/dedoping of lithium. Thus, charging/discharging capability may deteriorate.

When the element Z is nitrogen, "y" in the general formula $SiZ_xM_y$ is preferably equal to zero (0) or nearly equal to zero.

<Composition in the case of the element Z being boron>

When the element Z is boron, the Z-concentration ratio Q(Z) (hereinafter also referred to as "boron-concentration ratio Q(B)") is generally 0.30 or more, preferably 0.40 or more, and more preferably 0.50 or more and is generally 0.85 or less, and preferably 0.70 or less. When the element Z is boron, the compound having a composition closest to silicon and being present in equilibrium is $SiB_3$.

If the boron-concentration ratio Q(B) is below the above-specified range, the activity of silicon may not be effectively reduced, the reactivity with a liquid electrolyte may not be suppressed, and the resulting electrode may expand largely. Thus, it is difficult to obtain preferred properties in cyclic operation. If the boron-concentration ratio Q(B) exceeds the range, boron may constitute stable compounds being present in equilibrium, such as $SiB_3$ and $SiB_4$. In this case, the activity of silicon may not be reduced, and the reactivity with a liquid electrolyte may not be suppressed even when the amount of boron is increased.

When the element Z is boron, "y" in the general formula $SiZ_xM_y$ is preferably equal to zero or nearly equal to zero.

[State of the element Z in silicon]

The element Z in silicon in the active material thin film is preferably present in such a state that the "XIsz" value is generally 2.5 or less, and preferably 2.0 or less as determined by the X-ray diffractometry. The "XIsz" value is preferably equal to or less than the above-specified range. In this case, a phase including the element Z lying in a nonequilibrium state in silicon is defined as a main component, and other compounds being present in equilibrium, such as $Si_aZ_p$, are defined as minor components. When the "XIsz" value exceeds the range, a compound of a phase being present in equilibrium, such as $Si_aZ_p$, constitutes a main component. In this case, the activity of silicon may not be effectively reduced, the reactivity with a liquid electrolyte may not be suppressed, and the properties in cyclic operation may deteriorate. In addition, the resulting compound such as $Si_aZ_p$ has low conductivity. The active material thin film may thereby have decreased conductivity, which makes it difficult to carry out doping/dedoping of lithium. Thus, charging/discharging capability may deteriorate. The lower limit of the "XIsz" value is generally 0.00 or more.

[Distribution of silicon in film thickness direction]

The weight concentration distribution of silicon in a film thickness direction of an active material thin film is such that the difference (absolute value) between an average and a maximum value or minimum value of the weight concentration of silicon is generally 40% or less, preferably 30% or less, and more preferably 25% or less in an electron probe microanalysis (EPMA) measurement mentioned later. If the difference (absolute value) between an average and a maximum value or minimum value exceeds the above-specified range, the conductivity in a film thickness direction may deteriorate with the advance of cyclic operation, because the electrode locally expands and shrinks upon charging/discharging. The difference (absolute value) between an average and a maximum value or minimum value preferably falls within the range or below. This means that the thin film is substantially arranged continuously from a current collector.

The weight concentration distribution of silicon in a film thickness direction of an active material thin film may be, for example, determined in the following manner.

Initially, a sample film negative electrode is placed on a specimen support so that the active material thin film faces upward and that the section of the active material thin film lies flat. Elements are analyzed in a region from the current collector to the surface of the active material thin film using an electron probe microanalyzer, such as "JXA-8100" available from JEOL. The total sum of measured weight concentrations of elements is converted into 100%, and the weight concentration distribution of silicon in a film thickness direction is determined.

[Distribution of the element Z]

The element Z in the compound $SiZ_xM_y$ is present on the order of one micrometer or less as, for example, an atom, molecule, or cluster. The element Z is preferably distributed uniformly in a film thickness direction and in an in-plane direction (a direction perpendicular to the film thickness direction) in the active material thin film. It is more preferably distributed uniformly in an in-plane direction of the active material thin film and distributed with such an inclination in a film thickness direction of the active material thin film that the concentration of the element Z increases toward the surface of the active material thin film. If the element Z is distributed heterogeneously and present locally in an in-plane direction of the active material thin film, expansion/shrinkage caused by charging/discharging of silicon may intensively occur in a silicon region where the element Z is absent. Accordingly, the conductivity may deteriorate as cyclic operation proceeds. How the element Z is distributed can be determined, for example, by using an electron probe microanalysis (EPMA), as illustrated in the after-mentioned Examples.

The element Z is preferably present or deposited continuously from a current collector. The phrase "the element Z is arranged continuously" refers to the case where the difference (absolute value) between an average and a maximum value or minimum value of the concentration by weight of the element Z is generally 40% or less, preferably 30% or less, and more preferably 25% or less in electron probe microanalysis (EPMA), as in the case of silicon mentioned above.

[Distribution of the element M]

The distribution of the element M of the compound $SiZ_xM_y$ in an active material thin film is not specifically limited. The element M may be distributed uniformly or heterogeneously.

[Structure]

An active material thin film in a film negative electrode according to the present invention may have a structure such as a columnar structure or a laminar structure.

[Raman "RC", "RSC", "RS", and "RSN" values]

When the element Z is carbon, an active material thin film of a film negative electrode according to the present invention may have a Raman "RC" value of preferably 2.0 or less, more preferably 1.0 or less, and particularly preferably 0.5 or less, as determined by the Raman spectroscopic analysis. If the Raman "RC" value exceeds this range, it may be difficult to provide a higher capacity effectively due to the presence of silicon and to provide preferred properties of the resulting battery. The lower limit of the Raman "RC" value is generally 0.0 or more, from the viewpoint of measurement.

When the element Z is carbon, the active material thin film has a Raman "RSC" value of preferably 0.25 or less, and more preferably 0.20 or less as determined by Raman spectrometry. If the Raman "RCS" value exceeds this range, the conductivity may deteriorate, and it may be difficult to carry out doping/dedoping of lithium. Thus, the charging/discharging capability may deteriorate. The lower limit of the Raman "RSC" value is generally 0.0 or more from the viewpoint of measurement.

When the element Z is carbon, the Raman "RS" value is preferably 0.40 or more, and more preferably 0.50 or more and is preferably 0.75 or less, and more preferably 0.65 or less, as determined by Raman spectrometry. When the element Z is nitrogen, the Raman "RS" value is preferably 0.40 or more, and more preferably 0.50 or more and is preferably 1.00 or less, and more preferably 0.9 or less, as determined by Raman spectrometry. If the Raman "RS" value is below the range, the properties in cyclic operation may deteriorate. If the Raman "RS" value exceeds the range, the battery may not carry out charging/discharging.

When the element Z is nitrogen, the Raman "RSN" value is preferably 0.9 or less, and more preferably 0.8 or less, as determined by Raman spectrometry. If the Raman "RSN" value exceeds this range, the conductivity may deteriorate, and it may be difficult to carry out doping/dedoping of lithium. Thus, the charging/discharging capability may deteriorate. The lower limit of the Raman "RSN" value is generally 0.0 or more from the viewpoint of measurement.

["XIsz" value determined by X-ray diffraction]

The "XIsz" value of an active material thin film of a film negative electrode according to the present invention as determined by X-ray diffraction may be as follows. When the element Z is carbon, the "XIsz" value is not specifically limited but is preferably 1.20 or less, and more preferably 0.70 or less. When the element Z is nitrogen, it is preferably 1.10 or less, and more preferably 1.00 or less. When the element Z is boron, it is preferably 0.90 or less, and more preferably 0.80 or less. If the "XIsz" value exceeds this range, silicon carbide, silicon nitride, and silicon boride may be formed in a large amount when the element Z is carbon, nitrogen, or boron, respectively. In this case, the active material may have a decreased discharging capacity per unit weight. The lower limit of the "XIsz" value is generally 0.00 or more:

<"XIsz" value in the case of the element Z being carbon>

A peak intensity "Isz" at $2\theta$ of 35.7 degrees and a peak intensity "Is" at $2\theta$ of 28.4 degrees are measured, and the intensity ratio "XIsz" (XIsz = Isz/Is) of the intensity "Isz" to the intensity "Is" is determined by calculation. This ratio is defined as the "XIsz" value of the active material thin film.

The peaks at $2\theta$ of 35.7 degrees and at $2\theta$ of 28.4 degrees are considered to be peaks derived from SiC and silicon, respectively. An "XIsz" value of 1.20 or less means that little SiC is detected.

<"XIsz" value in the case of the element Z being nitrogen>

A peak intensity "Isz" at $2\theta$ of 70.2 degrees and a peak intensity "Is" at $2\theta$ of 28.4 degrees are measured, and the intensity ratio "XIsz" ("XIsz" = Isz/Is) of the intensity "Isz" to the intensity "Is" is determined by calculation, and this ratio is defined as the "XIsz" value of the active material thin film.

The peaks at $2\theta$ of 27.1 degrees and 28.4 degrees are considered to be peaks derived from $Si_3N_4$ and silicon, respectively. An "XIsz" value of 1.10 or less means that almost no $Si_3N_4$ is detected.

<"XIsz" value in the case of the element Z being boron>

A peak intensity "Isz" at $2\theta$ of 33.4 degrees and a peak intensity "Is" at $2\theta$ of 28.4 degrees are measured, and the ratio "XIsz" value of the intensity "Isz" to the intensity "Is" ("XIsz" = Isz/Is) is determined by calculation. This ratio is defined as the "XIsz" value of the active material thin film.

The peaks at $2\theta$ of 33.4 degrees and at $2\theta$ of 28.4 degrees are considered to be a peak derived from $SiB_4$ or $SiB_6$ and a peak derived from silicon, respectively. An "XIsz" value of 0.90 or less means that little $SiB_4$ or $SiB_6$ is detected.

["IRsc" value]

When the element Z is carbon, an active material thin film of a film negative electrode according to the present invention may have an "IRsc" value of preferably 0.9 or more, more preferably 1.1 or more, and particularly preferably 1.2 or more, as determined by infrared transmission photometric analysis using an infrared spectrophotometer, after carrying out charging/discharging. If the "IRsc" value is below this range, the active material thin film containing silicon may react with a liquid electrolyte during cyclic operation, and this gradually reduces the amount of the active material substantially capable of charging/discharging. Thus, it may be difficult to obtain preferred properties in cyclic operation. The upper limit of the "IRsc" value is about 3.0.

Current collectors will be illustrated in detail below.

[Material]

Materials for current collectors include, for example, copper, nickel, and stainless steel, of which copper is preferred because it can be easily formed into a thin film and is inexpensive. Copper foils include a rolled copper foil prepared by rolling and an electrolytic copper foil prepared by electrolysis, both of which can be used as a current collector. A copper alloy having a strength higher than that of pure copper is preferably used when a copper foil has a thickness of less than 25 $\mu$m. Examples of such copper alloys are phosphor bronze, titanium copper, Corson alloy, and Cu-Cr-Zr alloys.

A current collector including a rolled copper foil is resistant to cracking even when a negative electrode using the current collector is tightly rounded or folded at an acute angle, because copper crystals in the current collector are arrayed in a rolling direction. Accordingly, this can be advantageously used in a down-sized cylindrical battery. An electrolytic copper foil is prepared, for example, by dipping a metallic drum in a liquid electrolyte containing copper ion, applying a current while rotating the drum to thereby deposit copper as a film on the surface of the drum, and peeling off the resulting copper film. It is also acceptable to deposit copper on the rolled copper foil by electrolysis. One or both sides of a copper foil may be subjected to roughening or a surface treatment. Examples of surface treatments are chromate filming to form a film having a thickness of about several nanometers to one micrometer, and a surface treatment typically with titanium (Ti).

[Thickness]

The thickness of a current collector substrate made typically of a copper foil is preferably small, because a thinner film negative electrode can be prepared, and a film negative electrode with a larger surface area can be packed into a battery housing having the same capacity (volume). If the thickness is excessively small, the copper foil may have insufficient strength and may be broken during, for example, winding in the production of battery. Consequently, the thickness of a current collector substrate made typically of a copper foil is preferably about 10 to 70 $\mu$m. When active material thin films are arranged on both sides of a copper foil, the thickness of the copper foil is preferably smaller. In this case, the thickness of the copper foil is more preferably 8 to 35 $\mu$m. When the resulting battery is charged and discharged, the active material thin films expand and shrink, and this may cause the cracking of the copper foil. The above range is set so as to avoid the cracking.

When another metal foil than copper foil is used as a current collector, the thickness of the foil may be suitably set according to the type of the metal foil. The thickness is generally within the range of about 10 to about 70 $\mu$m.

[Properties]

A current collector substrate may preferably have the following properties.

(1) Average surface roughness (Ra)

An average surface roughness (Ra) of an active material thin film on a current collector substrate is determined according to the method described in Japanese Industrial Standards (JIS) B0601-1994. The average surface roughness (Ra) may be, but is not limited to, generally 0.05 $\mu$m or more, preferably 0.1 $\mu$m or more, and particularly preferably 0.15 $\mu$m or more and may be generally 1.5 $\mu$m or less, preferably 1.3 $\mu$m or less, and particularly preferably 1.0 $\mu$m or less.

Good charging/discharging properties in cyclic operation are expected by setting the average surface roughness (Ra) of the current collector substrate within the above-specified range between the lower limit and the upper limit. At an average surface roughness (Ra) of the lower limit or more, the current collector substrate may have a large area at an interface with the active material thin film so as to have improved adhesion with the active material thin film. The upper limit of the average surface roughness (Ra) is not specifically limited. The average surface roughness (Ra) is, however, preferably 1.5 μm or less, because a foil having an average surface roughness (Ra) exceeding 1.5 μm is generally difficult to obtain as a foil having a practical thickness as battery.

(2) Tensile strength

The tensile strength of a current collector substrate may be, but is not specifically limited to, generally 100 N/mm$^2$ or more, preferably 250 N/mm$^2$ or more, more preferably 400 N/mm$^2$ or more, and particularly preferably 500 N/mm$^2$ or more.

The tensile strength is determined by dividing a maximum tensile force necessary for a test piece to be broken by the sectional area of the test piece. The tensile strength herein may be determined using an apparatus and a method similar to those in the determination of elongation percentage. A current collector substrate having a high tensile strength is resistant to cracking and thereby yields good properties in cyclic operation. The cracking may be caused by expansion/shrinkage of an active material thin film when charging/discharging is carried out.

(3) 0.2% proof stress

The 0.2% proof stress of a current collector substrate may be, but is not limited to, generally 30 N/mm$^2$ or more, preferably 150 N/mm$^2$ or more, and particularly preferably 300 N/mm$^2$ or more.

The "0.2% proof stress" refers to a magnitude of a load necessary for imparting plastic (permanent) strain of 0.2% and means that a work still deforms 0.2% even after applying a load of this magnitude and removing the load. The 0.2% proof stress herein may be determined using an apparatus and a method similar to those in the determination of elongation percentage. A current collector substrate having a high 0.2% proof stress is resistant to plastic deformation and can thereby yield good properties in cyclic operation. The plastic deformation of the current collector substrate may be caused by expansion/shrinkage of an active material thin film when charging/discharging is carried out.

A first preferred embodiment of a method of producing a film negative electrode will be illustrated in detail below.

According to this method, one of the following sources (i) to (vii) is used as an evaporation source, a sputtering source, or a thermal spraying source, and depositions of silicon, the element Z, and the element M, or depositions of silicon and the element Z when "y" is equal to zero or nearly equal to zero, are carried out concurrently according to at least one technique selected from vapor deposition, sputtering, and thermal spraying, to thereby deposit a film to a thickness of 1 to 30 μm on the current collector substrate. The thickness herein is preferably one described as a preferred thickness in the description of "Film thickness of the active material thin film".

(i) A composition of silicon, the element Z, and the element M, or a composition of silicon and the element Z when "y" is equal to zero or nearly equal to zero;

(ii) A mixture of silicon, the element Z, and the element M, or a mixture of silicon and the element Z when "y" is equal to zero or nearly equal to zero;

(iii) Silicon, the element Z, and the element M, separately, or silicon and the element Z, separately, when "y" is equal to zero or nearly equal to zero, in which these components may be gases containing the elements, separately;

(iv) The element M alone which may be a gas containing the element M, and a composition or mixture of silicon and the element Z;

(v) A gas containing silicon, the element Z, and the element M, or a gas containing silicon and the element Z when "y" is equal to zero or nearly equal to zero;

(vi) Silicon alone, and a composition or mixture of the element Z and the element M; and

(vii) The element Z alone which can be a gas containing the element Z, and a composition or mixture of silicon and the element M.

Raw materials for silicon alone in an evaporation source, a sputtering source, or a thermal spraying source (hereinafter also briefly referred to as "source") include, for example, crystalline silicon and amorphous silicon. Boron, carbon, and nitrogen elements can be used as the Z source. Two or more different elements can be used as the elements Z, as long as they satisfy the above conditions.

Of sources, one or more compounds each containing silicon, the element Z, and the element M, or those containing silicon and the element Z can be used as the source (i). The source (i) is a composition of silicon, the element Z, and the element M, or a composition of silicon and the element Z when "y" is equal to zero or nearly equal to zero. These silicon source, the Z source, and the M source may be used in the form of, for example, powders, granules, pellets, blocks, or sheets or plates.

When "y" is not equal to zero and an element M is contained in a compound of the general formula $SiZ_xM_y$, the element M is other than silicon and the element Z and can be at least one element selected from copper, nickel, and oxygen elements, of which oxygen element is more preferred.

An active material thin film can be formed by at least one of the following techniques mentioned in detail below:

A: sputtering;
B: vacuum deposition;
C: chemical vapor deposition (CVD);
D: ion plating; and
E: thermal spraying (flame spraying, plasma spraying).

A. Sputtering

According to sputtering, an active material is ejected from a target including the source by the action of plasma under reduced pressure, and the ejected active material collides against and deposits on a current collector substrate to form a thin film. The resulting active material thin film deposited by sputtering has a good interface and adheres satisfactorily with the current collector substrate.

Either of a direct-current voltage and an alternating-current voltage can be applied as a sputtering voltage to the target. The collision energy of ion from the plasma can be controlled by applying a substantially negative bias voltage to the current collector substrate.

The pressure of a chamber may be set at an ultimate pressure of generally 0.1 Pa or less before the deposition of a thin film, so as to avoid contamination of impurities.

An inert gas such as neon (Ne), argon (Ar), krypton (Kr), or xenon (Xe) gas is used as a sputtering gas. Among them, argon gas is preferred typically from the viewpoint of sputtering efficiency. When the element Z in the compound $SiZ_xM_y$ is nitrogen, the sputtering gas preferably contains a trace amount of nitrogen gas in combination with the inert gas in production. The sputtering gas pressure is generally about 0.05 to about 70 Pa.

The temperature of a current collector substrate upon deposition of an active material thin film by sputtering can be controlled typically by water cooling or using a heater. The temperature of the current collector substrate is generally within the range of room temperature to 900°C and is preferably 150°C or lower.

The deposition rate of an active material thin film by sputtering is generally 0.01 to 0.5 $\mu$m per minute.

The surface of a current collector substrate may be etched before the deposition of an active material thin film. The etching may be carried out by a pretreatment such as reverse sputtering or another plasma treatment. Such a pretreatment is effective for removing contaminants and oxide films on the surface of a copper foil as a current collector substrate and for improving adhesion of an active material thin film.

B. Vacuum deposition

According to vacuum deposition, the source to constitute an active material is melted, evaporated, and deposited on a current collector substrate. A thin film can be deposited by vacuum deposition at a higher deposition rate than by sputtering. Vacuum deposition is therefore more advantageous in production cost than sputtering is, because an active material thin film having a predetermined film thickness can be deposited by vacuum deposition in a shorter time than by sputtering. Specifically, vacuum deposition can be carried out by a procedure such a induction heating, Ohmic-resistance heating, or electron-beam evaporation. According to induction heating, a vapor deposition material is heated, melted, and evaporated to form a film by heating a vapor deposition crucible made typically of graphite using an induction current. Likewise, the material is heated by applying a current to a vapor deposition boat, for example, and heating the boat according to Ohmic-resistance heating. The material is heated by electron beams according to electron-beam evaporation.

Vacuum deposition is carried out generally in an atmosphere of vacuum. When the element Z in a compound $SiZ_xM_y$ is nitrogen, the compound $SiZ_xM_y$ may be deposited in one process in a vacuum by reducing the pressure while introducing a trace amount of nitrogen gas together with an inert gas.

The pressure of a chamber before the deposition of a thin film may be set at an ultimate pressure of generally 0.1 Pa or less, so as to avoid contamination of impurities.

The temperature of a current collector substrate upon deposition of an active material thin film by vacuum deposition can be controlled typically by using a heater. The temperature of the current collector substrate is generally within the range of room temperature to 900°C and is preferably 150°C or lower.

The deposition rate of an active material thin film by vacuum deposition is generally 0.1 to 50 $\mu$m per minute.

The surface of a current collector substrate may be subjected to etching, for example; by ion irradiation using an ion gun before the deposition of an active material thin film on the current collector substrate, as in sputtering. Such etching can further improve the adhesion between the substrate and the active material thin film. The active material thin film can have further higher adhesion with the current collector substrate by collision of ion against the current collector substrate during the deposition of the thin film.

C. Chemical vapor deposition (CVD)

According to CVD, the source to constitute an active material is deposited on a current collector substrate by the action of a gaseous phase chemical reaction. According to CVD, a wide variety of materials can be prepared with high purity, because a vaporized compound in a reaction chamber is controlled by introduction of a gas. Specific procedures for CVD include thermal CVD, plasma CVD, photo-chemical vapor deposition (photo-assisted CVD), and catalytic chemical vapor deposition (cat-CVD). According to thermal CVD, a raw material gas of a halogen compound with a high vapor pressure is introduced with a carrier gas and a reaction gas into a reactor heated at about 1000°C. Thus, a thermal-chemical reaction is induced to thereby deposit a thin film. Plasma is used in plasma CVD instead of thermal energy. Light energy is used in photo-chemical vapor deposition instead of thermal energy. Catalytic chemical vapor deposition (cat-CVD) refers to catalytic chemical vapor phase epitaxy, in which a thin film is formed by using a catalyzed degradation between a source gas and a heated catalyst.

In CVD, a silicon source includes, for example, $SiH_4$ and $SiCl_4$, and a Z source includes, for example, $NH_3$, $N_2$, $BCl_3$, $CH_4$, $C_2H_6$, and $C_3H_8$. Each of these can be used alone or in combination.

D. Ion plating

According to ion plating, the source to constitute an active material is melted and evaporated, and vaporized particles are ionized and excited by the action of plasma to thereby deposit a film firmly on a current collector substrate. More specifically, the source is melted and evaporated, for example, by induction heating, Ohmic-resistance heating, or electron-beam evaporation. The ionization/excitation is carried out, for example, by activated reactive evaporation, multi-cathode thermoelectron irradiation, high frequency excitation, hollow cathode discharge (HCD), cluster ion beam application, or a multi-arc technique. A procedure for the evaporation of the source and a procedure of ionization and excitation can be used in a suitable combination.

E. Thermal spraying

According to thermal spraying, the source to constitute an active material is heated and thereby melted or softened to form fine particles, and the fine particles are accelerated toward a current collector substrate, and are solidified and deposited on the current collector substrate. Specific procedures of thermal spraying include flame spraying, arc spraying, direct-current plasma spraying, RF plasma spraying, and laser thermal spraying.

These film deposition techniques can be used in combination. For example, a high deposition rate by vapor deposition and a firm adhesion of a film with a current collector substrate by sputtering can be utilized in combination. In this case, for example, a first thin film layer is deposited by sputtering, and then a second thin film layer is deposited at a high rate by vapor deposition. Accordingly, an active material thin film can be deposited at a high deposition rate with an interface region exhibiting good adhesion with a current collector substrate. Such a hybridized combination of film deposition techniques efficiently yields a film negative electrode which exhibits a high charging/discharging capacity and excellent charging/discharging properties in cyclic operation.

The sputtering and vapor deposition procedures, if used in combination to deposit an active material thin film, are preferably carried out continuously or successively while maintaining an atmosphere under reduced pressure. This is because contamination of impurities can be prevented by depositing a first thin film layer and a second thin film layer continuously without exposing to the air. A preferred deposition system for use herein is, for example, a deposition system in which sputtering and vapor deposition are sequentially carried out in the same vacuum atmosphere whereas the current collector substrate is transferred.

When active material thin films are deposited on both sides of a current collector substrate, an active material thin film layer to be deposited on one side of the current collector substrate and another active material thin film layer to be deposited on the other side are preferably deposited continuously while mainlining an atmosphere under reduced pressure. Each of these active material thin films may include the combination of a first thin film layer and a second thin film layer.

Next, a second preferred embodiment of a method of producing a film negative electrode will be illustrated below. Specifically, a production method, in which the element Z in the general formula $SiZ_xM_y$ is carbon, will be illustrated below. According to this method, one of the following sources (i) to (vii) is used as an evaporation source, a sputtering source, or a thermal spraying source, and depositions of silicon, carbon, and the element M, or depositions of silicon and carbon when "y" is equal to zero or nearly equal to zero, are carried out concurrently according to at least one technique selected from vapor deposition, sputtering, and thermal spraying, to thereby deposit a film to a thickness of 1 to 30 $\mu$m on a current collector substrate. The thickness herein is preferably one described as a preferred thickness in the description of "Film thickness of the active material thin film".

(i) A composition of silicon, carbon, and the element M, or a composition of silicon and carbon when "y" is equal to zero or nearly equal to zero;

(ii) A mixture of silicon, carbon, and the element M, or a mixture of silicon and carbon when "y" is equal to zero or nearly equal to zero;

(iii) Silicon, carbon, and the element M, separately, or silicon and carbon, separately, when "y" is equal to zero or nearly equal to zero, in which these components may be gases containing the elements, separately;

(iv) The element M alone which may be a gas containing the element M, and a composition or mixture of silicon and carbon;

(v) A gas containing silicon, carbon, and the element M, or a gas containing silicon and carbon when "y" is equal to zero or nearly equal to zero;

(vi) Silicon alone, and a composition or mixture of carbon and the element M; and

(vii) Carbon alone which can be a gas containing carbon, and a composition or mixture of silicon and the element M.

Raw materials for silicon alone in an evaporation source, a sputtering source, or a thermal spraying source (hereinafter also briefly referred to as "source") include, for example, crystalline silicon and amorphous silicon. Carbon materials such as naturally-occurring graphite and artificial graphite can be used as a carbon source. An element M source is other than silicon and the element Z and is generally any of the elements copper, nickel, and oxygen, of which oxygen element is more preferred.

Of sources, one or more compounds each containing silicon, carbon, and the element M can be used as the source (i). The source (i) is a composition of silicon, carbon, and the element M.

These silicon source, carbon source, and the M source may be used in the form of, for example, powders, granules, pellets, blocks, or sheets or plates.

The element M may be used as a nitride or an oxide of silicon or carbon. When the element M is an element that is present as a gas at ordinary temperature, such as oxygen, an oxygen source gas is preferably used during the deposition of silicon and carbon in production.

Film deposition may be carried out using A: sputtering, B: vacuum deposition, and C: CVD.

A. Sputtering

An inert gas such as neon (Ne), argon (Ar), krypton (Kr), or xenon (Xe) gas is used as a sputtering gas. Among them, argon gas is preferred typically from the viewpoint of sputtering efficiency. When the element Z in the general formula $SiC_xM_y$ is oxygen, the sputtering gas preferably contains a trace amount of oxygen gas in combination with the inert gas in production. The pressure of the sputtering gas is generally about 0.05 to about 70 Pa.

B. Vacuum deposition

Vacuum deposition is carried out generally in an atmosphere of vacuum. When the element Z in the general formula $SiC_xM_y$ is oxygen, a compound Si/C/M may be deposited in one process in a vacuum by reducing the pressure while introducing a trace amount of oxygen gas together with an inert gas.

C. CVD

A silicon source for use herein includes, for example, $SiH_4$ and $SiCl_4$, and a carbon element source includes, for example, $CH_4$, $C_2H_6$, and $C_3H_8$. Each of these can be used alone or in combination.

Next, a third preferred embodiment of a method of producing a film negative electrode will be illustrated below. Specifically, a production method, in which the element Z is carbon and the element M is oxygen in the general formula $SiZ_xM_y$, will be illustrated below.

According to this method, one of the following sources (I) to (IV) is used as an evaporation source, a sputtering source, or a thermal spraying source, and depositions of silicon and carbon is carried out concurrently in an atmosphere at an oxygen concentration in a deposition gas (or in a residual gas when deposition is conducted in a vacuum) of 0.000% to 0.125% according to at least one technique selected from vapor deposition, sputtering, and thermal spraying, to thereby deposit a film to a thickness of 1 to 30 $\mu$m on a current collector substrate. The thickness herein is preferably one described as a preferred thickness in the description of "Film thickness of the active material thin film".

(I) A composition of silicon and carbon;

(II) A mixture of silicon and carbon;

(III) Silicon and carbon separately; and

(IV) A gas containing silicon and carbon

A silicon source in an evaporation source, a sputtering source, or a thermal spraying source can be, for example, crystalline silicon or amorphous silicon. Carbon materials such as naturally-occurring graphite and artificial graphite can be used as a carbon source. As oxygen in a deposition gas, oxygen gas or another oxygen-containing gas can be used alone or in combination with an inert gas.

These silicon source and carbon source may be used in the form of, for example, powders, granules, pellets, blocks, or sheets or plates. The oxygen gas is preferably used as a source gas during the deposition of silicon and carbon in production.

The same film-deposition procedures as in the production method according to the first preferred embodiment can be used herein.

The oxygen concentration of a deposition gas, or of a residual gas when deposition is carried out in a vacuum, is generally 0.0001% or more and is generally 0.125% or less, preferably 0.100% or less, more preferably 0.020% or less in vapor deposition, sputtering, or thermal spraying. If the oxygen concentration of a deposition gas exceeds this range, the resulting Si/C/O thin film may contain a large amount of oxygen element, exhibit increased reactivity with a liquid electrolyte and thereby show decreased charging/discharging efficiency. If the oxygen concentration is excessively low, it may be difficult to deposit a Si/C/O thin film.

The oxygen concentration of a deposition gas can be determined, for example, by analyzing a mass spectrum of the deposition gas using a quadrupole mass filter. When argon gas containing oxygen gas in coexistence is used as a deposition gas, the oxygen concentration can also be determined by analyzing the argon gas using an oxygen analyzer.

Next, a fourth preferred embodiment of a method of producing a film negative electrode will be illustrated below. Specifically, a production method, in which the element Z is nitrogen and "y" is equal to zero or nearly equal to zero in the general formula $SiZ_xM_y$, will be illustrated below.

According to this method, one of the following sources (I) to (IV) is used as an evaporation source, a sputtering source, or a thermal spraying source, and depositions of silicon and nitrogen are carried out concurrently in an atmosphere at a nitrogen concentration in a deposition gas, or in a residual gas when deposition is conducted in a vacuum, of 1% to 22% according to at least one technique selected from vapor deposition, sputtering, and thermal spraying, to thereby deposit a film to a thickness of 1 to 30 $\mu$m on the current collector substrate. The thickness herein is preferably one described as a preferred thickness in the description of "Film thickness of the active material thin film".

> (I) Silicon alone;
> (II) A composition containing silicon;
> (III) A mixture containing silicon; and
> (IV) A gas containing silicon.

A single silicon source in an evaporation source, a sputtering source, or a thermal spraying source can be, for example, crystalline silicon or amorphous silicon. Nitrogen in a deposition gas can be nitrogen gas or another nitrogen-containing gas alone or in combination with an inert gas.

The silicon source, for example, may be used in the form of powders, granules, pellets, blocks, or sheets or plates. The nitrogen gas is preferably used as a source gas during the deposition of silicon in production.

The same film-deposition procedures as in the production method according to the first preferred embodiment can be used herein.

The nitrogen concentration of a deposition gas, or of a residual gas when deposition is carried out in a vacuum, is generally 1% or more and is generally 22% or less, preferably 15% or less, and more preferably 10% or less. If the nitrogen concentration of the deposition gas exceeds this range, the resulting $SiN_x$ thin film may contain a large amount of nitrogen element, and this may invite the formation of silicon nitride not contributing to charging/discharging to thereby reduce the discharging capacity. If the nitrogen concentration is excessively small, a $SiN_x$ thin film containing nitrogen may not, be deposited, and the resulting battery may have deteriorated properties in cyclic operation.

The nitrogen concentration of a deposition gas can be determined, for example, by analyzing a mass spectrum of the deposition gas using a quadrupole mass filter.

Next, a nonaqueous electrolyte secondary battery including the film negative electrode will be illustrated below. This battery includes a positive electrode, a negative electrode, and an electrolyte, in which the positive and negative electrodes are each capable of occluding/releasing lithium ion. Materials for members other than the negative electrode for constituting the battery will be exemplified below. It should be noted, however, that usable materials are not limited to these specific examples.

The positive electrode is arranged as an active material layer on a current collector substrate. The active material layer includes a positive electrode active material and an organic substance (binder) having binding and tackifying actions. The positive electrode is generally formed by the steps of dispersing a positive electrode active material and an organic substance having binding and tackifying actions in water or an organic solvent to form a slurry, applying a thin film of the slurry to a current collector substrate, drying the applied thin film, and subsequently pressing the dried thin film to predetermined thickness and density.

Raw material for the positive electrode active material are not specifically limited, as long as they are capable of occluding and releasing lithium. Examples of raw materials include lithium transition metal multiple oxide materials such as lithium cobalt oxide, lithium nickel oxide, and lithium manganese oxide; transition metal oxide materials such as manganese dioxide; and carbonaceous materials such as graphite fluoride. More specific examples are $LiFeO_2$, $LiCoO_2$, $LiNiO_2$, $LiMn_2O_4$, and non-stoichiometric compounds of these; $MnO_2$, $TiS_2$, $FeS_2$, $Nb_3S_4$, $Mo_3S_4$, $CoS_2$, $V_2O_5$, $P_2O_5$, $CrO_3$, $V_3O_3$, $TeO_2$, and $GeO_2$. Each of these can be used alone or in combination.

The positive electrode active material layer can include a conductant agent for a positive electrode. The conductant agent for a positive electrode can be any one, as long as it is an electroconductive material that does not cause a chemical change at charging/discharging potentials of a positive electrode active material to be used. Examples thereof include graphites including naturally-occurring graphites such as flaky graphite, and artificial graphite; carbon blacks such as acetylene black, Ketjenblack, channel black, furnace black, lamp black, and thermal black; conductive fibers such as carbon fibers and metal fibers; powders of metals such as carbon fluoride and aluminum; conductive whiskers such as zinc oxide and potassium titanate; conductive metal oxides such as titanium oxide; and organic conductive materials such as polyphenylene derivatives. Each of these materials can be used alone or in combination as a mixture. Of these conductant agents, artificial graphite and acetylene black are typically preferred. The amount of conductant agents is not specifically limited, but is preferably 1 to 50 percent by weight and particularly preferably 1 to 30 percent by weight, relative to the positive electrode active material. The amount of a carbon and/or a graphite, if used, is more preferably 2 to 15 percent by weight relative to the positive electrode active material.

Organic substances having binding and tackifying actions for use in the formation of a positive electrode active material layer are not specifically limited and can be any of thermoplastic resins and thermosetting resins-Examples thereof include polyethylenes, polypropylenes, polytetrafluoroethylenes (PTFEs), poly(vinylidene fluoride)s (PVDFs), styrene butadiene rubber, tetrafluoroethylene-hexafluoroethylene copolymers, tetrafluoroethylene-hexafluoropropylene copolymers (FEPs), tetrafluoroethylene-perfluoroalkyl vinyl ether copolymers (PFAs), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylenes (PCTFEs), vinylidene fluoride-pentafluoropropylene copolymers, propylene-tetrafluoroethylene copolymers, ethylene-chlorotrifluoroethylene copolymers (ECTFEs), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers or (Na+) ion crosslinked derivatives thereof, ethylene-methacrylic acid copolymers or (Na+) ion crosslinked derivatives thereof, ethylene-methyl acrylate copolymers or (Na+) ion crosslinked derivatives thereof, and ethylene-methyl methacrylate copolymers or (Na+) ion crosslinked derivatives thereof. Each of these materials can be used alone or in combination as a mixture. Of these materials, more preferred are poly(vinylidene fluoride)s (PVDFs) and polytetrafluoroethylenes (PTFEs).

The positive electrode active material layer may further include fillers, dispersing agents, ionic conductors, pressure intensifiers, and other additives, in addition to the conductant agents. The fillers can be any fibrous materials that do not induce chemical changes in the resulting battery. Generally used fillers are fibers including fibers of olefinic polymers such as polypropylenes and polyethylenes; glass fibers; and carbon fibers. The amount of fillers is not specifically limited but is preferably 0 to 30 percent by weight in terms of content in an active material layer.

To prepare a slurry of positive electrode active material, an aqueous solvent or an organic solvent is used as a dispersion medium. Water is generally used as an aqueous solvent. However, an aqueous solvent may further contain, in addition to water, about 30 percent by weight or less of one or more additives with respect to water. The additives herein include alcohols such as ethanol; and cyclic amides such as N-methylpyrrolidone.

Organic solvents generally include cyclic amides such as N-methylpyrrolidone; linear amides such as N,N-dimethylformamide and N,N-dimethylacetamide; aromatic hydrocarbons such as anisole, toluene, and xylenes; and alcohols such as butanol and cyclohexanol. Among them, cyclic amides such as N-methylpyrrolidone; and linear amides such as N,N-dimethylformamide and N,N-dimethylacetamide are preferred. Each of these can be used alone or in combination.

A positive electrode active material layer may be formed by adding a positive electrode active material, an organic substance having binding and tackifying actions as a binder, and, where necessary, a conductant agent for a positive electrode and a filler, to the solvent to prepare a slurry of positive electrode active material, and applying the slurry to a predetermined thickness onto a current collector substrate for a positive electrode.

In the slurry of positive electrode active material, the concentration of a positive electrode active material is, in terms of its upper limit, generally 70 percent by weight or less and preferably 55 percent by weight or less, and is, in terms of its lower limit, generally 30 percent by weight or more, and preferably 40 percent by weight or more. If the concentration of a positive electrode active material exceeds the upper limit, the positive electrode active material may become susceptible to aggregation in the slurry of positive electrode active material. If it is below the lower limit, the positive electrode active material may become susceptible to precipitation during storage of the slurry of positive electrode active material.

The concentration of a binder in a slurry of positive electrode active material is, in terms of its upper limit; generally 30 percent by weight or less, and preferably 10 percent by weight or less and is, in terms of its lower limit, generally 0.1 percent by weight or more, and preferably 0.5 weight percent or more. If the binder concentration exceeds the upper limit, the resulting positive electrode may have an increased internal resistance. If it is below the lower limit, the positive electrode active material layer may show poor binding ability.

Valve metals or alloys thereof, for example, are preferably used in a current collector substrate for a positive electrode. Such valve metals form passive state films on their surface as a result of anodization in a liquid electrolyte. Examples of valve metals include metals of Group 4, Group 5, and Group 13 of the Periodic Table of Elements, and alloys of these metals. Specific examples thereof include aluminum (Al), titanium (Ti), zirconium (Zr), hafnium (Hf), niobium (Nb), tantalum (Ta), and alloys containing these metals. Among them, aluminum, titanium, tantalum, and alloys containing these metals are preferred, of which aluminum and alloys thereof are more preferred, because they are light-weighed and exhibit high energy densities. The thickness of a current collector substrate for a positive electrode is not specifically limited but is generally about 1 to about 50 $\mu$m.

Any electrolytes such as liquid electrolytes and solid electrolytes can be used as the electrolyte. Such electrolytes refer to all ionic conductors and include both liquid electrolytes and solid electrolytes.

Examples of liquid electrolytes are solutions of solutes in nonaqueous solvents. Such solutes can be, for example, alkali metal salts and quaternary ammonium salts. More specifically, preferred solutes include $LiClO_4$, $LiPF_6$, $LiBF_4$, $LiCF_3SO_3$, $LiN(CF_3SO_2)_2$, $LiN(CF_3CF_2SO_2)_2$, $LiN(CF_3SO_2)(C_4F_9SO_2)$, and $LiC(CF_3SO_2)_3$. Each of these solutes can be used alone or in combination. The content of these solutes in a liquid electrolyte is preferably 0.2 mol/L or more, more preferably 0.5 mol/L or more and is preferably 2 mol/L or less, and more preferably 1.5 mol/L or less.

Examples of nonaqueous solvents include cyclic carbonates such as ethylene carbonate, propylene carbonate, butylene carbonate, and vinylene carbonate; cyclic ester compounds such as $\gamma$-butyrolactone; chain ethers such as 1,2-dimethoxyethane; cyclic ethers such as crown ether, 2-methyltetrahydrofuran, 1,2-dimethyltetrahydrofuran, 1,3-dioxolane, and tetrahydrofuran; and chain carbonates such as diethyl carbonate, ethyl methyl carbonate, and dimethyl carbonate. Among them, nonaqueous solvents including cyclic carbonate and chain carbonates are preferred.

Each of these solvents can be used alone or in combination.

Nonaqueous liquid electrolytes for use in the present invention may further contain cyclic carbonates intramolecularly having an unsaturated bond and various known auxiliaries such as overcharge inhibitors, deoxidizing agents, and dehydrating agents.

Cyclic carbonates intramolecularly having an unsaturated bond include, for example, vinylene carbonic ester compounds, vinylethylene carbonic ester compounds, and methyleneethylene carbonic ester compounds.

Vinylene carbonic ester compounds include, for example, vinylene carbonate, methylvinylene carbonate, ethylvinylene carbonate, 4,5-dimethylvinylene carbonate, 4,5-diethylvinylene carbonate, fluorovinylene carbonate, and trifluoromethylvinylene carbonate.

Vinylethylene carbonic ester compounds include, for example, vinylethylene carbonate, 4-methyl-4-vinylethylene carbonate, 4-ethyl-4-vinylethylene carbonate, 4-n-propyl-4-vinylethylene carbonate, 5-methyl-4-vinylethylene carbonate, 4,4-divinylethylene carbonate, and 4,5-divinylethylene carbonate.

Methyleneethylene carbonic ester compounds include, for example, methyleneethylene carbonate, 4,4-dimethyl-5-methyleneethylene carbonate, and 4,4-diethyl-5-methyleneethylene carbonate.

Among them, vinylene carbonate and vinylethylene carbonate are preferred, of which vinylene carbonate is more preferred.

Each of these can be used alone or in combination.

The content of a cyclic carbonic ester compound intramolecularly having an unsaturated bond, if contained, in a nonaqueous liquid electrolyte is generally 0.01 percent by weight or more, preferably 0.1 percent by weight or more, particularly preferably 0.3 percent by weight or more, and most preferably 0.5 percent by weight or more, and is generally 8 percent by weight or less, preferably 4 percent by weight or less, and particularly preferably 3 percent by weight or less.

A battery may have improved properties in cyclic operation by incorporating a cyclic carbonate intramolecularly having an unsaturated bond into a liquid electrolyte. This is probably because a stable protective film can be formed on a surface of a negative electrode. However, if the content of the cyclic carbonate is excessively small, these properties may not be improved sufficiently. If it is excessively large, a gas is liable to form in a larger amount during storage at high temperatures. The content of the cyclic carbonate in the liquid electrolyte is therefore preferably set within the above-specified range.

Overcharge inhibitors include, for example, aromatic compounds such as biphenyl, alkylbiphenyls, terphenyl, partially hydrogenated derivatives of terphenyl, cyclohexylbenzene, t-butylbenzene, t-amylbenzene, diphenyl ether, and dibenzofuran; partially fluorinated derivatives of the aromatic compounds, such as 2-fluorobiphenyl, o-cyclohexylfluorobenzene, and p-cyclohexylfluorobenzene; fluorine-containing anisole compounds such as 2,4-difluoroanisole, 2,5-difluoroanisole, and 2,6-difluoroanisole.

Each of these can be used alone or in combination.

The content of an overcharge inhibitor in a nonaqueous liquid electrolyte is generally 0.1 to 5 percent by weight. The explosion and ignition of a battery can be suppressed by incorporating an overcharge inhibitor into the battery.

Examples of the other auxiliaries include carbonic ester compounds such as fluoroethylene carbonate, trifluoropropylene carbonate, phenylethylene carbonate, erythritan carbonate, spiro-bis-dimethylene carbonate, and methoxyethyl-methyl carbonate; carboxylic acid anhydrides such as succinic anhydride, glutaric anhydride, maleic anhydride, citraconic anhydride, glutaconic anhydride, itaconic anhydride, diglycolic anhydride, cyclohexanedicarboxylic acid anhydride, cyclopentanetetracarboxylic acid dianhydride, and phenylsuccinic anhydride; sulfur-containing compounds such as ethylene sulfite, 1,3-propane sultone, 1,4-butanesultone, methyl methanesulfonate, busulfan, sulfolane, sulfolene, dimethylsulfone and tetramethylthiuram monosulfide, N,N-dimethylmethane sulfonamide, and N,N-diethylmethane sulfonamide; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; hydrocarbon compounds such as heptane, octane, and cycloheptane; and fluorine-containing aromatic compounds such as fluorobenzene, difluorobenzene, hexafluorobenzene, and benzotrifluoride.

Each of these can be used alone or in combination.

The content of these auxiliaries in a nonaqueous liquid electrolyte is generally 0.1 to 5 percent by weight. A battery can maintain its capacity after storage at high temperatures and can have improved properties in cyclic operation by incorporating these auxiliaries.

Nonaqueous liquid electrolytes can be converted into solid electrolytes in the form of a gel, rubber, or solid sheet by incorporating organic polymeric compounds into liquid electrolytes. Specific examples of organic polymeric compounds include polyether polymeric compounds such as poly(ethylene oxide)s and poly(propylene oxide)s; crosslinked polymers of polyether polymeric compounds; vinyl alcohol polymeric compounds such as poly(vinyl alcohol)s and poly(vinyl butyral)s; insolubilized derivatives of vinyl alcohol polymeric compounds; polyepichlorohydrins; polyphosphazenes; polysiloxanes; polymeric vinyl compounds such as polyvinylpyrrolidones, poly(vinylidene carbonate)s, and polyacrylonitriles; and copolymers such as poly($\omega$-methoxyoligooxyethylene methacrylate)s and poly($\omega$-methoxyoligooxyethylene methacrylate-co-methyl methacrylate)s.

Where necessary, a negative electrode for a nonaqueous electrolyte secondary battery may further include other components such as an outer can, 'a gasket, a sealing plate, and a cell case, in addition to an electrolyte, a negative electrode, and a positive electrode.

A separator may include any material and may have any shape. A separator is configured to separate a positive electrode from a negative electrode so as to avoid physical contact between them. It is preferably one having high ionic permeability and a low electric resistance. The separator preferably includes a material selected from materials which are stable against liquid electrolytes and can maintain liquid electrolytes satisfactorily. Specific examples thereof include porous sheets or nonwoven fabrics prepared from polyolefins such as polyethylenes and polypropylenes.

A nonaqueous electrolyte secondary battery according to the present invention may have any shape. For example, it can be configured into a cylindrical battery including sheet electrodes and separator formed into a spiral; a cylindrical battery having an inside-out structure including pellet electrodes and separator; or a coin-shaped battery including a laminate of pellet electrodes and separator.

A nonaqueous electrolyte secondary battery according to the present invention including at least an electrolyte, a negative electrode, and a positive electrode can be produced by any method not specifically limited, and the production method can be appropriately selected from among generally employed methods.

For example, a nonaqueous electrolyte secondary battery according to the present invention can be produced by placing a negative electrode on an outer can; arranging a liquid electrolyte and a separator on the negative electrode; placing a positive electrode so as to face the negative electrode; and crimping these components with a gasket and a sealing plate so as to assemble the battery. Examples

The present invention will be illustrated in further detail with reference to several examples below. It should be noted, however, the present invention is not limited to these specific embodiments without departing from the spirit and the scope of the invention.

[EXAMPLE 1]

A film negative electrode was prepared by carrying out depositions of an active material thin film for forty-five minutes using a target material and a current collector substrate in a direct-current sputtering system ("HSM-52" produced by Shimadzu Corporation) and thereby yielded a film negative electrode. A mixture of silicon and carbon was used as the target material. This target was a disc having an area ratio of silicon to carbon of about 100:9. The current collector substrate used herein was an electrolytic copper foil having an average surface roughness (Ra) of 0.2 $\mu$m, a tensile strength of 280 N/mm$^2$, a 0.2% proof stress of 220 N/mm$^2$, and a thickness of 18 $\mu$m.

More specifically, the current collector substrate was mounted to a water-cooled holder, was maintained at about 25°C, a chamber was evacuated to 4x 10$^{-4}$ Pa, and a high-purity argon gas was fed to the chamber at 40 standard cubic centimeters per minute (sccm), and the pressure of the atmosphere was adjusted to 1.6 Pa by adjusting the opening of a main valve. Next, the film deposition was carried out at a power density of 4.7 W/cm$^2$ and a deposition rate of about 1.8 nm per second (0.108 $\mu$m per minute). The sputtering gas had an oxygen concentration of 0.0010%.

The surface of the substrate was etched by carrying out reverse sputtering before the film deposition, in order to remove oxide films on the surface of the electrolytic copper foil.

The section of the resulting film negative electrode was observed using a scanning electron microscope (SEM), and the thin film was found to have a thickness of 5 $\mu$m (Figs. 1a and 2a).

The composition of the thin film was analyzed by X-ray photoelectron spectrometry (XPS) according to the following method. The thin film contained carbon element in a concentration of 24 atomic percent and had a carbon-concentration ratio Q(C) with respect to a carbon concentration in SiC of 0.49 and an atomic concentration ratio Si/C/O of 1.00/0.33/0.04.

The Raman values of the thin film were determined by Raman spectrometry according to the following method. The thin film was found to have an "RC" value of 0.05 and an "RS" value of 0.55. Regarding the "RSC" value, "sc" peak was not detected.

An X-ray diffractometry of the thin film was conducted according to the following method. No clear peak derived from SiC was detected, and the thin film was found to have an "XIsz" value of 0.38.

The weight concentration distribution of silicon in a film thickness direction of the thin film was determined using an electron probe microanalyzer (EPMA) according to the following method. With reference to Fig. 1b, silicon was distributed in the thin film with a difference (absolute value) between an average and a maximum value or minimum value of within 25%, indicating that silicon was deposited substantially continuously from the current collector. A distribution of carbon element in the thin film was determined. With reference to Fig. 2c, carbon element was uniformly distributed with a size of 1 $\mu$m or less in the silicon thin film.

It should be noted that the same analysis and measurement methods as in Example 1 were employed in following Examples and Comparative Examples, unless otherwise specified.

<X-ray photoelectron spectrometry (XPS)>

The X-ray photoelectron spectrometry was carried out in the following manner. A sample film negative electrode was placed on a specimen support so that its surface lies in flat. Next, depth profiling was carried out with a K$\alpha$ ray of aluminum as an X-ray source using an X-ray photoelectron spectrometer ("ESCA" available from ULVAC-PHI, Inc.) while carrying out argon (Ar) sputtering. Spectra of silicon 2p (90 to 110 eV), carbon 1s (280 to 300 eV), and oxygen 1s (525 to 545 eV) were determined at such a depth (e.g., 200 nm) as to yield constant concentrations of these elements. A charge correction was carried out while setting the peak top of carbon 1s at 284.5 eV. Peak areas of the spectra of silicon 2p, carbon 1s and oxygen 1s were determined, and the peak areas were multiplied by a sensitivity coefficient of the measuring instrument to thereby determine the atomic concentrations of silicon, carbon, and oxygen, respectively. Next, an atomic concentration ratio Si/C/O (silicon atomic concentration/carbon atomic concentration/oxygen atomic concentration) was determined by calculation from the determined atomic concentrations of silicon, carbon, and oxygen. This was defined as the composition Si/C/O of the thin film.

<Raman spectrometry>

Raman spectrometry was conducted by placing a sample film negative electrode in a measurement cell, and carrying out measurement using a Raman spectrograph ("Raman spectrograph" produced by JASCO Corporation) while applying argon ion laser light to the surface of the specimen in the cell.

Conditions for Raman spectrometry are as follows.

Argon ion laser wavelength: 514.5 nm

Laser power on the specimen: 15 to 40 mW

Resolving power: 10 to 20 cm$^{-1}$

Measurement range: 200 cm$^{-1}$ to 1900 cm$^{-1}$

Smoothing: unweighted average, convolution 15 points

<X-ray diffractometry>

X-ray diffractometry was conducted by placing a sample film negative electrode in a measurement cell, and carrying out X-ray diffraction at 2$\theta$ of 10 to 70 degrees according to an Out-of-Plane technique using the "RINT 2000PC" produced by Rigaku Corporation. A background correction was carried out by plotting a straight line between a point at 2$\theta$ of about 15 to about 20 degrees and a point at 2$\theta$ of about 40 to 45 degrees.

<Electron probe microanalysis (EPMA)>

The weight concentration distribution in a film thickness direction or the distribution in a cross section of a sample thin film was determined by electron probe microanalysis (EPMA) in the following manner. Specifically, a specimen of a film negative electrode was prepared using a microtome without resin embedding, and elemental analysis within a range from the current collector to the surface of the thin film in the specimen was carried out using an electron probe microanalyzer ("JXA-8100" produced by JEOL). The weight concentration distribution in a film thickness direction was determined by setting the total sum of measured values of elements at 100% and determining a weight concentration distribution of silicon in a film thickness direction.

A lithium secondary battery was prepared according to the following method using the above-prepared film negative electrode. The battery was evaluated on discharging capacity, charging/discharging efficiency, property in cyclic operation (A), charging/discharging efficiency upon cyclic operation of fifty cycles, and expansion ratio of electrode after cyclic operation, according to the following methods. The results are shown in Table 2.

<Method of preparing lithium secondary battery>

A film negative electrode prepared according to the above method was punched to a diameter of 10 mm, was dried at 110°C in a vacuum, was transferred to a glove box, and was assembled with a liquid electrolyte, a separator, and a counter electrode in an argon atmosphere into a coin-shaped battery (lithium secondary battery). The liquid electrolyte used herein was a 1 mol/L-LiPF$_6$ liquid electrolyte in a solvent of a 3:7 (by weight) mixture of ethylene carbonate (EC) and diethyl carbonate (DEC). The separator was a polyethylene separator. The counter electrode was a lithium metal counter electrode.

<Evaluation of discharging capacity>

A cyclic operation herein includes the procedures of charging the lithium counter electrode to 10 mV at a current density of 1.23 mA/cm$^2$; further charging the lithium counter electrode to a current of 0.123 mA at a constant voltage of 10 mV; doping the negative electrode with lithium; and discharging the lithium counter electrode to 1.5 V at a current density of 1.23 mA/cm$^2$. This cyclic operation was repeated a total of five times (five cycles). An average of discharges in third to fifth cycles was defined as the discharging capacity. The discharging capacity was converted into a discharging capacity per weight in the following manner. A copper foil was punched to the same weight as that of the negative electrode. The weight of the active material was determined by subtracting the weight of the punched copper foil from the weight of the negative electrode. The discharging capacity per weight was determined by calculation according to the following equation.

$$\text{Discharging capacity (mAh/g)}$$
$$= [\text{Average discharging capacity during third to fifth cycles (mAh)}]/[\text{Weight of active material (g)}]$$

$$\text{Weight of active material (g)} = [\text{Weight of negative electrode (g)}] - [\text{Weight of copper foil with the same area (g)}]$$

<Evaluation of charging/discharging efficiency>

The charging/discharging efficiency was determined upon measurement of the discharging capacity by calculation according to the following equation:

$$\text{Charging/discharging efficiency (\%) = [ (Initial}$$

$$\text{discharging capacity (mAh))/(Initial charging capacity}$$

$$\text{(mAh)] x 100}$$

<Evaluation of property in cyclic operation (A)>

A cyclic operation of charging/discharging was repeated a total of fifty times (fifty cycles) by the procedure of the measurement of discharging capacity, and a maintenance factor in cyclic operation (A) was determined by calculation according to the following equation:

$$\text{Cyclic operation maintenance factor (A) (\%)}$$

$$\text{= [ (Discharging capacity after cyclic operation of fifty}$$

$$\text{cycles (mAh))/(Average discharging capacity during third to}$$

$$\text{fifth cycles (mAh))] x 100}$$

<Evaluation of charging/discharging efficiency upon cyclic operation of fifty cycles>

A cyclic operation of charging/discharging was repeated a total of fifty times (fifty cycles) by the procedure of the measurement of the property in cyclic operation (A). The charging/discharging efficiency upon cyclic operation of fifty cycles was determined by calculation according to the following equation:

$$\text{Charging/discharging efficiency (\%) upon cyclic}$$

$$\text{operation of fifty cycles}$$

$$\text{= [ (Discharging capacity in fiftieth cycle (mAh))/(Charging}$$

$$\text{capacity in fiftieth cycle (mAh))] x 100}$$

<Measurement of expansion ratio of electrode after cyclic operation>

After the measurement of the property in cyclic operation (A), namely, after cyclic operation of fifty cycles, the discharged coin-shaped battery was disassembled in a glove box in an argon atmosphere while avoiding short circuit, the electrode was taken out, was washed with dehydrated dimethyl ether solvent, and was dried. Then the thickness of the electrode excluding the copper foil, after cyclic operation and discharging was determined by scanning electron microscopic observation (SEM observation). The expansion ratio of electrode after cyclic operation was determined by calculation according to the following equation on the basis of the thickness of the electrode excluding the copper foil, before assembly of the battery.

$$\text{Expansion ratio of electrode after cyclic operation}$$

$$\text{(time) = [ (Thickness of electrode after cyclic}$$

$$\text{operation)/(Thickness of electrode before}$$

$$\text{charging/discharging)]}$$

A negative electrode after the measurement of the property (A) in cyclic operation was taken out, from which an active material thin film was peeled, and an infrared ray transmission of the active material thin film was determined according to the following procedure. The thin film was found to have an "IRsc" value after cyclic operation of 1.5, as shown in Table 2. A film negative electrode before charging/discharging was subjected to measurement of infrared ray transmission by the same procedure and was found to have an "IRsc" value of 0.3. With reference to Fig. 3, this thin film showed substantially no absorption at around 1600 to 1650 $cm^{-1}$.

<Measurement of infrared ray transmission>

An active material thin film was peeled off from the film negative electrode after charging/discharging, was placed in a measurement cell, and the measurement of infrared ray transmission was carried out according to a transmission technique using an infrared spectrophotometer ("Magna 560" produced by Thermo Electron Corporation). The active material thin film as a specimen was prepared in the following manner. After the measurement of the property in cyclic operation (A), namely, after cyclic operation of fifty cycles, the discharged coin-shaped battery was disassembled in a glove box in an argon atmosphere while avoiding short circuit, the electrode was taken out, was washed with dehydrated dimethyl ether solvent, and was dried. Then, the active material thin film was peeled off from the current collector copper foil and was subjected to the measurement.
With reference to Fig. 3, a background correction was carried out by plotting a straight line between minimum values at 2000 to 4000 $cm^{-1}$, extending the plotted line to determine a background, and subtracting this background value from the respective intensities.

[EXAMPLE 2]

An active material thin film was deposited, and a film negative electrode was prepared by the procedure of Example 1, except for using a target material having an area ratio of silicon to carbon of 100:2. The film deposition herein was carried out at a deposition rate of about 2.3 nm per second for forty minutes.
A cross section of the deposited thin film of the film negative electrode was observed with a scanning electron microscope (SEM), and the thin film was found to have a film thickness of 5 $\mu$m.
A compositional analysis revealed that the thin film had a carbon concentration of 6 atomic percent, a carbon-concentration ratio Q(C) with respect to a carbon concentration in SiC of 0.13, and an atomic concentration ratio Si/C/O of 1.00/0.07/0.08.
Raman values of the thin film were determined. As a result, the "c" peak and "sc" peak were not detected, and the thin film was found to have an "RC" value of zero, an "RSC" value of zero, and an "RS" value of 0.45.
X-ray diffractometry of the thin film was carried out. As a result, no clear peak of SiC was detected and the thin film was found to have an "XIsz" value of 0.15.
A weight concentration distribution of silicon in a film thickness direction and a distribution of carbon element in the thin film were determined by electron probe microanalysis (EPMA). Silicon was deposited substantially continuously from the current collector, and carbon element was uniformly distributed with a size of 1 $\mu$m or less in the silicon thin film, as in Example 1.
A coin-shaped battery was prepared using the above-prepared film negative electrode, and properties thereof were evaluated by the procedure of Example 1. The results are shown in Table 2.

[EXAMPLE 3]

An active material thin film was deposited, and a film negative electrode was prepared by the procedure of Example 1, except for using, as a target material, a sintered article of a mixture of silicon particles and carbon particles. The film deposition was carried out at a deposition rate of about 1.7 nm per second for forty-five minutes.
A cross section of the deposited thin film of the film negative electrode was observed with a scanning electron microscope (SEM), and the thin film was found to have a film thickness of 5 $\mu$m.
A compositional analysis revealed that the thin film had a carbon concentration of 30 atomic percent, a carbon-concentration ratio Q(C) with respect to a carbon concentration in SiC of 0.63, and an atomic concentration ratio Si/C/O of 1.00/0.45/0.06.
Raman values of the thin film were determined, and the thin film was found to have an "RC" value of 0.09, an "RSC" value of 0.13, and an "RS" value of 0.59.
X-ray diffractometry of the thin film was carried out. As a result, no clear peak of SiC was detected and the thin film was found to have an "XIsz" value of 0.60.
A weight concentration distribution of silicon in a film thickness direction and a distribution of carbon element in the thin film were determined by electron probe microanalysis (EPMA). Silicon was deposited substantially continuously from the current collector, and carbon element was uniformly distributed with a size of 1 $\mu$m or less in the silicon thin film, as in Example 1.
A coin-shaped battery was prepared using the above-prepared film negative electrode, and properties thereof were evaluated by the procedure of Example 1. The results are shown in Table 2.

[EXAMPLE 4]

An evaporation source was prepared by mixing silicon particles of about 20 $\mu$m in size and graphite in a weight ratio of 8:2, and pelletizing the mixture. A current collector substrate used herein was an electrolytic copper foil having an average surface roughness (Ra) of 0.2 $\mu$m, a tensile strength of 280 N/mm$^2$, a 0.2% proof stress of 220 N/mm$^2$, and a thickness of 18 $\mu$m. Using the current collector substrate, vapor deposition heating by electron beam (electron beam deposition) was carried out using "EX-400 system" produced by ULVAC Inc. to thereby yield a film negative electrode.

In this procedure, a chamber was evacuated to 9x 10$^{-5}$ Pa beforehand, and the film deposition was carried out at an emission current of 60 mA and a deposition rate of about 5 nm per second for fifteen minutes.

A cross section of the deposited thin film of the film negative electrode was observed with a scanning electron microscope (SEM), and the thin film was found to have a film thickness of 4 $\mu$m.

A compositional analysis revealed that the thin film had a carbon concentration of 18 atomic percent, a carbon-concentration ratio Q(C) with respect to a carbon concentration in SiC of 0.43, and an anatomic concentration ratio Si/C/O of 1/0.28/0.26.

Raman values of the thin film were determined, and the thin film was found to have an "RC" value of 0.10, an "RSC" value of 0.15, and an "RS" value of 0.60.

X-ray diffractometry of the thin film was carried out. As a result, no clear peak of SiC was detected and the thin film was found to have an "XIsz" value of 0.38.

A weight concentration distribution of silicon in a film thickness direction and a distribution of carbon element in the thin film were determined by electron probe microanalysis (EPMA). Silicon was deposited substantially continuously from the current collector, and carbon element was uniformly distributed with a size of 1 $\mu$m or less in the silicon thin film, as in Example 1.

A coin-shaped battery was prepared using the above-prepared film negative electrode, and properties thereof were evaluated by the procedure of Example 1. The results are shown in Table 2.

[EXAMPLE 5]

An active material thin film was deposited and a film negative electrode was prepared by the procedure of Example 1, except for setting the flow rate of high-purity argon gas upon film deposition at 90 sccm, and adjusting the opening of the main valve, and thereby carrying out the film deposition in an atmosphere at a pressure of 5.3 Pa. The film deposition was carried out at a deposition rate of about 1.5 nm per second for fifty minutes.

A cross section of the deposited thin film of the film negative electrode was observed with a scanning electron microscope (SEM), and the thin film was found to have a film thickness of 5 $\mu$m.

A compositional analysis revealed that the thin film had a carbon concentration of 22 atomic percent, a carbon-concentration ratio Q(C) with respect to a carbon concentration in SiC of 0.57, and an atomic concentration ratio Si/C/O of 1/0.40/0.42.

Raman values of the thin film were determined, and the thin film was found to have an "RC" value of 0.11, an "RSC" value of 0.17, and an "RS" value of 0.68.

X-ray diffractometry of the thin film was carried out. As a result, no clear peak of SiC was detected and the thin film was found to have an "XIsz" value of 0.73.

A weight concentration distribution of silicon in a film thickness direction and a distribution of carbon element in the thin film were determined by electron probe microanalysis (EPMA). Silicon was deposited substantially continuously from the current collector, and carbon element was uniformly distributed with a size of 1 $\mu$m or less in the silicon thin film, as in Example 1.

A coin-shaped battery was prepared using the above-prepared film negative electrode, and properties thereof were evaluated by the procedure of Example 1. The results are shown in Table 2.

[EXAMPLE 6]

A film negative electrode was prepared by carrying out deposition of an active material thin film for twenty-eight minutes using a target material and a current collector substrate in a direct-current sputtering system ("HSM-52" produced by Shimadzu Corporation). The target material was silicon, and the current collector substrate was an electrolytic copper foil having an average surface roughness (Ra) of 0.2 $\mu$m, a tensile strength of 280 N/mm$^2$, a 0.2% proof stress of 220 N/mm$^2$, and a thickness of 18 $\mu$m.

More specifically, the current collector substrate was mounted to a water-cooled holder, was maintained at about 25°C, a chamber was evacuated to 4x 10$^{-4}$ Pa beforehand, and a high-purity nitrogen gas was fed into the chamber to a pressure of 0.16 Pa while adjusting the opening of a main valve. Next, the pressure of the atmosphere was adjusted to 1.6 Pa by feeding high-purity argon gas. The film deposition was carried out at a power density of 7.1 W/cm$^2$ and a deposition rate of about 4 nm per second (0.24 $\mu$m per minute). The sputtering gas had a nitrogen concentration of 10%. The surface of the substrate was etched by carrying out reverse sputtering before the film deposition, in order to remove oxide films on the surface of the electrolytic copper foil.

A cross section of the deposited thin film of the film negative electrode was observed with a scanning electron microscope (SEM), and the thin film was found to have a film thickness of 6 $\mu$m (Fig. 4a).

The composition of the thin film was analyzed by X-ray photoelectron spectrometry (XPS) according to the following process. The thin film was found to have a nitrogen concentration of 33 atomic percent, a nitrogen-concentration ratio Q(N) with respect to a nitrogen concentration in SiN of 0.68, and an atomic concentration ratio Si/N/O of 1.00/0.51/0.02. Raman values of the thin film were determined by the Raman spectrometry procedure of Example 1, and the thin film was found to have an "RSN" value of 0.44 and an "RS" value of 0.72.

X-ray diffractometry of the thin film was carried out according to the following procedure. As a result, a clear peak derived typically from $Si_3N_4$ was not detected, and the thin film was found to have an "XIsz" value of 0.91.

A weight concentration distribution of silicon in a film thickness direction of the thin film was determined by electron probe microanalysis (EPMA) by the procedure of Example 1. With reference to Fig. 4b, silicon was distributed in the thin film with a difference (absolute value) between an average and a maximum value or minimum value of within 25%, indicating that silicon was deposited substantially continuously from the current collector.

A distribution of nitrogen element in the thin film was determined. As a result, nitrogen element was uniformly distributed with a size of 1 $\mu$m or less in the silicon thin film as with carbon element in Example 1.

A coin-shaped battery was prepared using the above-prepared film negative electrode, and properties thereof were evaluated by the procedure of Example 1. The results are shown in Table 2.

<X-ray photoelectron spectrometry>

The X-ray photoelectron spectrometry was carried out in the following manner. A sample film negative electrode was placed on a specimen support so that its surface lies in flat. Next, depth profiling was carried out with a K$\alpha$ ray of aluminum as an X-ray source using an X-ray photoelectron spectrometer ("ESCA" available from ULVAC-PHI, Inc.) while carrying out argon (Ar) sputtering. Spectra of silicon 2p (90 to 110 eV), nitrogen 1s (394 to 414 eV), and oxygen 1s (525 to 545 eV) were determined at such a depth (e.g., 200 nm) as to yield constant concentrations of these elements. A charge correction was carried out while setting the peak top of carbon 1s at 284.5 eV. The peak of carbon 1s was detected in a small quantity as impurities. Peak areas of the spectra of silicon 2p, nitrogen 1s, and oxygen 1s were determined, and the peak areas were multiplied by a sensitivity coefficient of the measuring instrument to thereby determine the atomic concentrations of silicon, nitrogen, and oxygen, respectively. Next, an element Z-concentration and an atomic concentration ratio Si/N/O (silicon atomic concentration/nitrogen atomic concentration/oxygen, atomic concentration) on the basis of $Si_aZ_p$ were determined by calculation from the determined atomic concentrations of silicon, nitrogen, and oxygen.

<X-ray diffractometry>

X-ray diffractometry was carried out by the procedure of Example 1, except for measuring in a range of 2$\theta$ of 10 to 90 degrees. A background correction was carried out by plotting straight line between a point at 2$\theta$ of about 10 to 20 degrees and a point at 2$\theta$ of about 50 to 70 degree.

[EXAMPLE 7]

An active material thin film was deposited, and a film negative electrode was prepared by the procedure of Example 6, except for feeding the high-purity nitrogen gas at a pressure of 0.24 Pa into the chamber. The film deposition was carried out at a deposition rate of about 3 nm per second for thirty minutes. The sputtering gas had a nitrogen concentration of 15%.

A cross section of the deposited thin film of the film negative electrode was observed with a scanning electron microscope (SEM), and the thin film was found to have a film thickness of 6 $\mu$m.

A compositional analysis revealed that the thin film had a nitrogen concentration of 41 atomic percent, a nitrogen-concentration ratio Q(N) with respect to a nitrogen concentration in SiN of 0.82, and an atomic concentration ratio Si/N/O of 1.00/0.70/0.02.

Raman values of the thin film were determined, and the thin film was found to have an "RSN" value of 0.69 and an "RS" value of 0.79. Next, X-ray diffractometry of the thin film was carried out. As a result, no clear peak derived typically from $Si_3N_4$ was detected, and the thin film was found to have an "XIsz" value of 0.94.

## EP 1 772 915 B1

A weight concentration distribution of silicon in a film thickness direction and a distribution of nitrogen element of the thin film were determined by electron probe microanalysis (EPMA) by the procedure of Example 6. Silicon was deposited substantially continuously from the current collector, and nitrogen element was uniformly distributed with a size of 1 $\mu$m or less in the silicon thin film, as in Example 6.

A coin-shaped battery was prepared using the above-prepared film negative electrode, and properties thereof were evaluated by the procedure of Example 1. The results are shown in Table 2.

[EXAMPLE 8]

An active material thin film was deposited, and a film negative electrode was prepared by the procedure of Example 6, except for feeding the high-purity nitrogen gas at a pressure of 0.08 Pa into the chamber. The film deposition was carried out at a deposition rate of about 4 nm per second for twenty-seven minutes. The sputtering gas had a nitrogen concentration of 5%.

A cross section of the deposited thin film of the film negative electrode was observed with a scanning electron microscope (SEM), and the thin film was found to have a film thickness of 6 $\mu$m.

A compositional analysis revealed that the thin film had a nitrogen concentration of 20 atomic percent, a nitrogen-concentration ratio Q(N) with respect to a nitrogen concentration in SiN of 0.43, and an atomic concentration ratio Si/N/O of 1.00/0.27/0.06.

Raman values of the thin film were determined, and the thin film was found to have an "RSN" value of 0.17 and an "RS" value of 0.57.

X-ray diffractometry of the thin film was carried out. As a result, no clear peak derived typically from $Si_3N_4$ was detected, and the thin film was found to have an "XIsz" value of 0.94.

A weight concentration distribution of silicon in a film thickness direction of the thin film and a distribution of nitrogen element were determined by electron probe microanalysis (EPMA). Silicon was deposited substantially continuously from the current collector, and nitrogen element was uniformly distributed with a size of 1 $\mu$m or less in the silicon thin film, as in Example 6.

A coin-shaped battery was prepared using the above-prepared film negative electrode, and properties thereof were evaluated by the procedure of Example 1. The results are shown in Table 2.

[EXAMPLE 9]

An active material thin film was deposited, and a film negative electrode was prepared by the procedure of Example 6, except for using a mixture of silicon and nitrogen as a target material, feeding a high-purity argon gas alone to the chamber, and setting the pressure in an atmosphere at 1.6 Pa. The mixture as the target material included a silicon disc and chips of $Si_3N_4$ arranged on the silicon disc, so as to have an area ratio of silicon to $Si_3N_4$ of about 100: 100. The film deposition was carried out at a deposition rate of about 4 nm per second for twenty-five minutes.

A cross section of the deposited thin film of the film negative electrode was observed with a scanning electron microscope (SEM), and the thin film was found to have a film thickness of 6 $\mu$m.

A compositional analysis revealed that the thin film had a nitrogen concentration of 20 atomic percent, a nitrogen-concentration ratio Q(N) with respect to a nitrogen concentration in SiN of 0.42, and an atomic concentration ratio Si/N/O of 1.00/0.26/0.06.

Raman values of the thin film were determined, and the thin film was found to have an "RSN" value of 0.15 and an "RS" value of 0.55.

X-ray diffractometry of the thin film was carried out. As a result, no clear peak derived typically from $Si_3N_4$ was detected, and the thin film was found to have an "XIsz" value of 0.95.

A weight concentration distribution of silicon in a film thickness direction of the thin film and a distribution of nitrogen element were determined by electron probe microanalysis (EPMA). Silicon was deposited substantially continuously from the current collector, and nitrogen element was uniformly distributed with a site of 1 $\mu$m or less in the silicon thin film, as in Example 6.

A coin-shaped battery was prepared using the above-prepared film negative electrode, and properties thereof were evaluated by the procedure of Example 1. The results are shown in Table 2.

[EXAMPLE 10]

An active material thin film was deposited, and a film negative electrode was prepared by the procedure of Example 6, except for using a mixture of silicon and boron as a target material, feeding a high-purity argon gas alone to the chamber, and setting the pressure of an atmosphere at 1.6 Pa. The mixture as the target material included a silicon disc and boron chips arranged on the silicon disc so as to have an area ratio of silicon to boron of about 100:8.

The film deposition was carried out at a deposition rate of about 3 nm per second for twenty-eight minutes.

A cross section of the deposited thin film of the film negative electrode was observed with a scanning electron microscope (SEM), and the thin film was found to have a film thickness of 5 $\mu$m (Fig. 5a).

A composition of the thin film was analyzed by the procedure of Example 6, and the thin film was found to have a boron concentration of 35 atomic percent, a boron-concentration ratio Q(B) with respect to a boron concentration in $SiB_3$ of 0.47, and an atomic concentration ratio Si/B/O of 1.00/0.54/0.02.

X-ray diffractometry of the thin film was carried out according to the following procedure. As a result, no clear peak derived typically from $SiB_4$ was detected, and the thin film was found to have an "XIsz" value of 0.46.

A weight concentration distribution of silicon in a film thickness direction of the thin film was determined by electron probe microanalysis (EPMA). With reference to Fig. 5b, silicon was distributed in the thin film with a difference (absolute value) between an average and a maximum value or minimum value of within 25%, indicating that silicon was deposited substantially continuously from the current collector.

A distribution of boron element in the thin film was determined, and it was found that boron element was uniformly distributed with a size of 1 $\mu$m or less in the silicon thin film as with carbon element in Example 1.

A coin-shaped battery was prepared using the above-prepared film negative electrode, and properties thereof were evaluated by the procedure of Example 1. The results are shown in Table 2.

<X-ray diffractometry>

X-ray diffractometry was carried out by the procedure of Example 1, except for measuring in a range of 2θ of 10 to 90 degrees. A background correction was carried out by plotting a straight line between a point at 2θ of about 10 to 20 degrees and a point at 2θ of about 60 to 70 degrees.

[EXAMPLE 11]

An active material thin film was deposited, and a film negative electrode was prepared by the procedure of Example 10, except for using a target material including a silicon disc and boron chips arranged on the silicon disc so as to have an area ratio of silicon to boron of about 100:10. The film deposition was carried out at a deposition rate of about 3 nm per second for thirty-six minutes.

A cross section of the deposited thin film of the film negative electrode was observed with a scanning electron microscope (SEM), and the thin film was found to have a film thickness of 6 $\mu$m.

A compositional analysis revealed that the thin film had a boron concentration of 42 atomic percent, a boron-concentration ratio Q(B) with respect to a boron concentration in $SiB_3$ of 0.57, and an atomic concentration ratio Si/B/O of 1.00/0.74/0.02.

X-ray diffractometry of the thin film was carried out. As a result, no clear peak derived typically from $SiB_4$ was detected, and the thin film was found to have an "XIsz" value of 0.46.

A weight concentration distribution of silicon in a film thickness direction and a distribution of boron element in the thin film were determined. Silicon was deposited substantially continuously from the current collector, and boron element was uniformly distributed with a size of 1 $\mu$m or less in the silicon thin film, as in Example 10.

A coin-shaped battery was prepared using the above-prepared film negative electrode, and properties thereof were evaluated by the procedure of Example 1. The result are shown in Table 2.

[EXAMPLE 12]

An active material thin film was deposited, and a film negative electrode was prepared by the procedure of Example 10, except for using a target material including a silicon disc and boron chips arranged on the silicon disc so as to have an area ratio of silicon to boron of about 100:12. The film deposition was carried out at a deposition rate of about 3 nm per second for forty-two minutes.

A cross section of the deposited thin film of the film negative electrode was observed with a scanning electron microscope (SEM), and the thin film was found to have a film thickness of 6 $\mu$m.

A compositional analysis revealed that the thin film had a boron concentration of 53 atomic percent, a boron-concentration ratio Q(B) with respect to a boron concentration in $SiB_3$ of 0.71, and an atomic concentration ratio Si/B/O of 1.00/1.15/0.02.

X-ray diffractometry of the thin film was carried out. As a result, no clear peak derived typically from $SiB_4$ was detected, and the thin film was found to have an "XIsz" value of 0.64.

A weight concentration distribution of silicon in a film thickness direction and a distribution of boron element in the thin film were determined. Silicon was deposited substantially continuously from the current collector, and boron element was uniformly distributed with a size of 1 $\mu$m or less in the silicon thin film, as in Example 10.

A coin-shaped battery was prepared using the above-prepared film negative electrode, and properties thereof were evaluated by the procedure of Example 1. The results are shown in Table 2.

[EXAMPLE 13]

An active material thin film was deposited, and a film negative electrode was prepared by the procedure of Example 8, except for using a mixture of silicon and carbon as a target material. The mixture as the target material included a disc having an area ratio of silicon to carbon of about 100:9. the film deposition was carried out at a deposition rate of about 3 nm per second for thirty-five minutes. The sputtering gas had a nitrogen concentration of 5%.

A cross section of the deposited thin film of the film negative electrode was observed with a scanning electron microscope (SEM), and the thin film was found to have a film thickness of 6 $\mu$m.

A compositional analysis revealed that the thin film had a carbon concentration of 6 atomic percent, a nitrogen concentration of 19 atomic percent, a carbon-concentration ratio Q(C) with respect to a carbon concentration in SiC of 0.16, a nitrogen-concentration ratio Q(N) with respect to a nitrogen concentration in SiN of 0.42. It was also found to have a Z-concentration ratio Q (C+N) as a total of these concentration ratios of 0.58 and an atomic concentration ratio Si/C and N/O of 1.00/0.09/0.27/0.06.

Raman values of the thin film were determined. As a result, neither "c" peak nor "sc" peak was detected, and the thin film was found to have an "RC" value of zero, an "RSC" value of zero, an "RSN" value of 0.16, and an "RS" value of 0.56.

X-ray diffractometry of the thin film was carried out. As a result, no clear peak derived typically from SiC and $Si_3N_4$ was detected, and the thin film was found to have an "XIsz" value of 0.14 on the basis of SiC or 0.92 on the basis of $Si_3N_4$.

A weight concentration distribution of silicon in a film thickness direction, and distributions of carbon and nitrogen elements in the thin film were determined by electron probe microanalysis (EPMA). Silicon was deposited substantially continuously from the current collector, and carbon and nitrogen elements were uniformly distributed with a size of 1 $\mu$m or less in the silicon thin film, as in Example 1.

A coin-shaped battery was prepared using the above-prepared film negative electrode, and properties thereof were evaluated by the procedure of Example 1. The results are shown in Table 2.

[EXAMPLE 14]

A film negative electrode was prepared by carrying out ion plating according to electron beam evaporation in a "DRP-40E system" produced by ULVAC Inc. using an evaporation source and a current collector substrate. The evaporation source was crushed silicon, and the current collector substrate was a roughened rolled copper foil having an average surface roughness (Ra) of 0.2 $\mu$m, a tensile strength of 400 N/mm$^2$, a 0.2% proof stress of 380 N/mm$^2$, and a thickness of 18 $\mu$m.

More specifically, a chamber was evacuated to 2x $10^{-3}$ Pa beforehand, and high-purity nitrogen gas was fed into the chamber, and the pressure of an atmosphere was adjusted to 0.05 Pa while adjusting the opening of a valve. Subsequently, the film deposition was carried out at a bias voltage of substrate of -0.5 kV, a current of 10 mA, and a deposition rate of about 2 nm per second for thirty-five minutes under conditions at a voltage of 10 kV and a current 140 mA in electron beam heating for the evaporation of silicon and at a coil output power of 200 W in high-frequency ionization of nitrogen.

A cross section of the deposited thin film of the film negative electrode was observed with a scanning electron microscope (SEM), and the thin film was found to have a film thickness of 4 $\mu$m.

A compositional analysis revealed that the thin film had a nitrogen concentration of 18 atomic percent, a nitrogen-concentration ratio Q(N) with respect to a nitrogen concentration in SiN of 0.37, and an atomic concentration ratio Si/N/O of 1.00/0.23/0.08.

Raman values of the thin film were determined, and the thin film was found to have an "RSN" value of 0.13 and an "RS" value of 0.55.

X-ray diffractometry of the thin film was carried out. As a result, no clear peak derived typically from $Si_3N_4$ was detected, and the thin film was found to have an "XIsz" value of 0.94.

A weight concentration distribution of silicon in a film thickness direction of the thin film and a distribution of nitrogen element were determined by electron probe microanalysis (EPMA). Silicon was deposited substantially continuously from the current collector, and nitrogen element was uniformly distributed with a size of 1 $\mu$m or less in the silicon thin film, as in Example 6.

A coin-shaped battery was prepared using the above-prepared film negative electrode, and properties thereof were evaluated by the procedure of Example 1. The results are shown in Table 2.

[EXAMPLE 15]

A film negative electrode was prepared by carrying out ion plating according to vapor deposition with high-frequency induction heating using an evaporation source and a current collector and using a system including the "MU-1700D High-frequency Induction Heating System" produced by Sekisui Medical Electronics Co., Ltd. in combination with the "MP201 Ion Gun System" produced by ARIOS INC. The evaporation source herein was crushed silicon, and the current collector substrate was a roughened rolled copper foil having an average surface roughness (Ra) of 0.2. $\mu$m, a tensile strength of 400 N/mm$^2$, a 0.2% proof stress of 380 N/mm$^2$, and a thickness of 18 $\mu$m.

More specifically, a chamber was evacuated to 7x 10$^{-4}$ Pa beforehand, and high-purity nitrogen gas was fed into the chamber, and the pressure of an atmosphere was adjusted to 0.1 Pa while adjusting the opening of a valve. Subsequently, the film deposition was carried out at a bias voltage of substrate of -0.5 kV and a deposition rate of about 20 nm per second for five minutes under conditions at a current of 12 A in high-frequency induction heating for the evaporation of silicon, and at an output power of 150 W and an ion acceleration voltage of 12 kV in ionization of nitrogen.

A cross section of the deposited thin film of the film negative electrode was observed with a scanning electron microscope (SEM), and the thin film was found to have a film thickness of 5 $\mu$m.

A compositional analysis revealed that the thin film had a nitrogen concentration of 23 atomic percent, a nitrogen-concentration ratio Q(N) with respect to a nitrogen concentration in SiN of 0.48, and an atomic concentration ratio Si/N/O of 1.00/0.32/0.07.

Raman values of the thin film were determined, and the thin film was found to have an "RSN" value of 0.23 and an "RS" value of 0.61.

X-ray diffractometry of the thin film was carried out. As a result, no clear peak derived typically from $Si_3N_4$ was detected, and the thin film was found to have an "XIsz" value of 0.92.

A weight concentration distribution of silicon in a film thickness direction and a distribution of nitrogen element of the thin film were determined by electron probe microanalysis (EPMA). Silicon was deposited substantially continuously from the current collector, and nitrogen element was uniformly distributed with a size of 1 $\mu$m or less in the silicon thin film, as in Example 6.

A coin-shaped battery was prepared using the above-prepared film negative electrode, and properties thereof were evaluated by the procedure of Example 1. The results are shown in Table 2.

[COMPARATIVE EXAMPLE 1]

An active material thin film was deposited, and a film negative electrode was prepared by the procedure of Example 1, except for using silicon as a target material.

A cross section of the deposited thin film of the film negative electrode was observed with a scanning electron microscope (SEM), and the thin film was found to have a film thickness of 5 $\mu$m.

A composition of the thin film was analyzed to find that the thin film did not contain carbon and nitrogen elements and had an atomic concentration ratio Si/O of 1.00/0.02.

Raman values of the thin film were determined. As a result, the "c" peak and "sc" peak were not detected, and the thin film was found to have an "RC" value of zero, an "RSC" value of zero, an "RS" value of 0.30, and an "RSN" value of 0.09.

A coin-shaped battery was prepared using the above-prepared film negative electrode, and properties thereof were evaluated by the procedure of Example 1. The results are shown in Table 2.

[COMPARATIVE EXAMPLE 2]

A film negative electrode was prepared by carrying out vapor deposition with Ohmic-resistance heating in the "VPC-260F System" produced by ULVAC using SiO as an evaporation source and a current collector substrate. The current collector substrate was an electrolytic copper foil having an average surface roughness (Ra) of 0.2 $\mu$m and a thickness of 18 $\mu$m. In this procedure, a chamber was evacuated to 3x 10$^{-3}$ Pa beforehand, a current of 155 A was applied, and the film deposition was conducted at a deposition rate of about 10 nm per second.

A cross section of the deposited thin film of the film negative electrode was observed with a scanning electron microscope (SEM), and the thin film was found to have a film thickness of 6 $\mu$m.

A composition of the thin film was analyzed to find that the thin film did not contain carbon and nitrogen elements and had an atomic concentration ratio Si/O of 1.00/1.33.

Raman values of the thin film were determined, and the thin film was found to have an "RC" value of 0.17, an "RSC" value of 0.06, an "RS" value of 1.09, and an "RSN" value of 0.10.

A coin-shaped battery was prepared using the above-prepared film negative electrode, and properties thereof were evaluated by the procedure of Example 1. The results are shown in Table 2.

[COMPARATIVE EXAMPLE 3]

An active material thin film was deposited, and a film negative electrode was prepared by the procedure of Example 10, except for using a mixture of silicon and nickel as a target material. The target material included a silicon disc and nickel chips arranged on the silicon disc so as to have an area ratio of silicon to nickel of about 100:4. The film deposition was carried out at a deposition rate of about 5 nm per second for twenty-five minutes.

A cross section of the deposited thin film of the film negative electrode was observed with a scanning electron microscope (SEM), and the thin film was found to have a film thickness of 6 $\mu$m.

A compositional analysis revealed that the thin film had a nickel concentration of 25 atomic percent, a nickel-concentration ratio Q (Ni) with respect to a nickel concentration in $NiSi_2$ of 0.79, and an atomic concentration ratio Si/Ni/O of 1.00/0.35/0.06.

Raman values of the thin film were determined, and it was found that no "c" peak was detected, and the thin film was found to have an "RC" value of zero, an "RSC" value of 0.04, an "RS" value of 0.28, and an "RSN" value of 0.07.

A coin-shaped battery was prepared using the above-prepared film negative electrode, and properties thereof were evaluated by the procedure of Example 1. The results are shown in Table 2.

[COMPARATIVE EXAMPLE 4]

An active material thin film was deposited, and a film negative electrode was prepared by the procedure of Example 10, except for using a mixture of silicon and carbon as a target material. The target material included a silicon disc and copper chips arranged on the silicon disc so as to have an area ratio of silicon to copper of about 100:3. The film deposition was carried out at a deposition rate of about 5 nm, per second for twenty-five minutes.

A cross section of the deposited thin film of the film negative electrode was observed with a scanning electron microscope (SEM), and the thin film was found to have a film thickness of 6 $\mu$m.

A compositional analysis revealed that the thin film had a copper concentration of 26 atomic percent, a copper-concentration ratio Q (Cu) with respect to a copper concentration in $Cu_3Si$ of 0.35, and an atomic concentration ratio Si/Cu/O of 1.00/0.36/0.03.

Raman values of the thin film were determined. As a result, the "c" peak and "sc" peak were not detected, and the thin film was found to have an "RC" value of zero, an "RSC" value of zero, an "RS" value of 0.34, and an "RSN" value of 0.09.

A coin-shaped battery was prepared using the above-prepared film negative electrode, and properties thereof were evaluated by the procedure of Example 1. The results are shown in Table 2.

[COMPARATIVE EXAMPLE 5]

An active material thin film was deposited, and a film negative electrode was prepared by the procedure of Example 10, except for using a mixture of silicon and cobalt as a target material. The target material herein included a silicon disc and cobalt chips arranged on the silicon disc so as to have an area ratio of silicon to cobalt of about 100:4. The film deposition was carried out at a deposition rate of about 5 nm per second for twenty-five minutes.

A cross section of the deposited thin film of the film negative electrode was observed with a scanning electron microscope (SEM), and the thin film was found to have a film thickness of 6 $\mu$m.

A compositional analysis revealed that the thin film had a cobalt concentration of 18 atomic percent, a cobalt-concentration ratio Q (Co) with respect to a cobalt concentration in $CoSi_2$ of 0.54, and an atomic concentration ratio Si/Co/O of 1.00/0.22/0.01.

A coin-shaped battery was prepared using the above-prepared film negative electrode, and properties thereof were evaluated by the procedure of Example 1. The results are shown in Table 2.

[COMPARATIVE EXAMPLE 6]

An active material thin film was deposited and a film negative electrode was prepared by the procedure of Example 1, except for using a high-purity argon gas containing 0.150% of oxygen upon film deposition. The film deposition was carried out at a deposition rate of about 0.6 nm per second for one hundred and forty minutes.

A cross section of the deposited thin film of the film negative electrode was observed with a scanning electron microscope (SEM), and the thin film was found to have a film thickness of 5 $\mu$m.

A compositional analysis revealed that the thin film had a carbon concentration of 27 atomic percent, a carbon-concentration ratio Q(C) with respect to a carbon concentration in SiC of 0.81, and an atomic concentration ratio Si/C/O of 1.00/0.68/0.83.

Raman values of the thin film were determined, and the thin film was found to have an "RC" value of 2.69, an "RSC" value of 0.35, and an "RS" value of 0.84.

X-ray diffractometry of the thin film was carried out, and the thin film was found to have an "XIsz" value of 0.77.

A coin-shaped battery was prepared using the above-prepared film negative electrode, and properties thereof were evaluated by the procedure of Example 1. The results are shown in Table 2.

[COMPARATIVE EXAMPLE 7]

An active material thin film was deposited, and a film negative electrode was prepared by the procedure of Example 1, except for using a sintered article of a mixture of silicon particles, SiO particles, and carbon particles as a target material. The film deposition was carried out at a deposition rate of about 1 nm per second for eighty minutes.
A cross section of the deposited thin film of the film negative electrode was observed with a scanning electron microscope (SEM), and the thin film was found to have a film thickness of 5 μm.
A compositional analysis revealed that the thin film had a carbon concentration of 69 atomic percent, a carbon-concentration ratio Q(C) with respect to a carbon concentration in SiC of 1.55, and an atomic concentration ratio Si/C/O of 1.00/3.45/0.55.
Raman values of the thin film were determined, and the thin film was found to have an "RC" value of 27.7, an "RSC" value of 1.05, and an "RS" value of 0.38.
X-ray diffractometry of the thin film was carried out, and the thin film was found to have an "XIsz" value of 0.42.
A coin-shaped battery was prepared using the above-prepared film negative electrode, and properties thereof were evaluated by the procedure of Example 1. The results are shown in Table 2.

[COMPARATIVE EXAMPLE 8]

An active material thin film was deposited and a film negative electrode was prepared by the procedure of Example 2, except for using a target material having an area ratio of silicon to carbon of 100:1. The film deposition was carried out at a deposition rate of about 2 nm per second for forty minutes.
A cross section of the deposited thin film of the film negative electrode was observed with a scanning electron microscope (SEM), and the thin film was found to have a film thickness of 5 μm.
A compositional analysis revealed that the thin film had a carbon concentration of 3 atomic percent, a carbon-concentration ratio Q(C) with respect to a carbon concentration in SiC of 0.06, and an atomic concentration ratio Si/C/O of 1.00/0.03/0.06.
Raman values of the thin film were determined. As a result, the "c" peak and "sc" peak were not detected, and the thin film was found to have an "RC" value of zero, an "RSC" value of zero, and an "RS" value of 0.41.
X-ray diffractometry of the thin film was carried out. As a result, no clear peak of SiC was detected and the thin film was found to have an "XIsz" value of 0.13.
A coin-shaped battery was prepared using the above-prepared film negative electrode, and properties thereof were evaluated by the procedure of Example 1. The results are shown in Table 2.

[COMPARATIVE EXAMPLE 9]

An active material thin film was deposited, and a film negative electrode was prepared by the procedure of Example 6, except for feeding the high-purity nitrogen gas at a pressure of 0.4 Pa to the chamber. The film deposition was carried out at a deposition rate of about 3 nm per second for forty minutes. The sputtering gas had a nitrogen concentration of 25%.
A cross section of the deposited thin film of the film negative electrode was observed with a scanning electron microscope (SEM), and the thin film was found to have a film thickness of 7 μm.
A compositional analysis revealed that the thin film had a nitrogen concentration of 53 atomic percent, a nitrogen-concentration ratio Q(N) with respect to a nitrogen concentration in SiN of 1.07, and an atomic concentration ratio Si/N/O of 1.00/1.15/0.02.
A Raman spectroscopic analysis of the thin film was carried out but no Raman peak was detected.
X-ray diffractometry of the thin film was carried out, and the thin film was found to have an "XIsz" value of 1.18.
A coin-shaped battery was prepared using the above-prepared film negative electrode, and properties thereof were evaluated by the procedure of Example 1. The results are shown in Table 2.

[COMPARATIVE EXAMPLE 10]

An active material thin film was deposited, and a film negative electrode was prepared by the procedure of Example 6, except for feeding the high-purity nitrogen gas at a pressure of $3.2 \times 10^{-3}$ Pa to the chamber. The film deposition was carried out at a deposition rate of about 3 nm per second for twenty-eight minutes. The sputtering gas had a nitrogen concentration of 0.2%.
A cross section of the deposited thin film of the film negative electrode was observed with a scanning electron microscope (SEM), and the thin film was found to have a film thickness of 5 μm.
A compositional analysis revealed that the thin film had a nitrogen concentration of 1 atomic percent, a nitrogen-concentration ratio Q(N) with respect to a nitrogen concentration in SiN of 0.02, and an atomic concentration ratio Si/N/O of 1.00/0.01/0.01.

Raman values of the thin film were determined, and the thin film was found to have an "RSN" value of 0.08 and an "RS" value of 0.31.

X-ray diffractometry of the thin film was carried out, and the thin film was found to have an "XIsz" value of 0.98.

A coin-shaped battery was prepared using the above-prepared film negative electrode, and properties thereof were evaluated by the procedure of Example 1. The results are shown in Table 2.

[COMPARATIVE EXAMPLE 11]

An active material thin film was deposited, and a film negative electrode was prepared by the procedure of Example 10, except for using, as a target material, a disc including silicon and boron in an area ratio of about 100:17. The film deposition was carried out at a deposition rate of about 2 nm per second for fifty minutes.

A cross section of the deposited thin film of the film negative electrode was observed with a scanning electron microscope (SEM), and the thin film was found to have a film thickness of 6 $\mu$m.

A compositional analysis revealed that the thin film had a boron concentration of 73 atomic percent, a boron-concentration ratio $Q(B)$ with respect to a boron concentration in $SiB_3$ of 0.98, and an atomic concentration ratio Si/B/O of 1.00/2.81/0.04. X-ray diffractometry of the thin film was carried out, and the thin film was found to have an "XIsz" value of 1.10.

A coin-shaped battery was prepared using the above-prepared film negative electrode, and properties thereof were evaluated by the procedure of Example 1. The results are shown in Table 2.

[COMPARATIVE EXAMPLE 12]

An active material thin film was deposited, and a film negative electrode was prepared by the procedure of Example 10, except for using, as a target material, a disc including silicon and boron in an area ratio of silicon to boron of about 100:1. The film deposition was carried out at a deposition rate of about 4 nm per second for twenty-five minutes.

A cross section of the deposited thin film of the film negative electrode was observed with a scanning electron microscope (SEM), and the thin film was found to have a film thickness of 5 $\mu$m.

A compositional analysis revealed that the thin film had a boron concentration of 4.5 atomic percent, a boron-concentration ratio $Q(B)$ with respect to a boron concentration in $SiB_3$ of 0.06, and an atomic concentration ratio Si/B/O of 1.00/0.05/0.02. X-ray diffractometry of the thin film was carried out, and the thin film was found to have an "XIsz" value of 0.10.

A coin-shaped battery was prepared using the above-prepared film negative electrode, and properties thereof were evaluated by the procedure of Example 1. The results are shown in Table 2.

[COMPARATIVE EXAMPLE 13]

A silicon thin film was deposited to a thickness of 4.5 $\mu$m using silicon as a target material by the procedure of Comparative Example 1. Next, a carbon thin film was deposited to a thickness of 0.5 $\mu$m on the silicon active material thin film using carbon as a target material.

The composition of the resulting thin film was determined by calculation based on the weight ratio of deposited materials, and the thin film was found to have a composition in terms of an atomic concentration ratio Si/C of 1.00/0.26.

A cross section of the deposited thin film of the film negative electrode was observed with a scanning electron microscope (SEM), and the thin film was found to include a silicon thin film and a carbon layer covering the surface of the silicon thin film and to have a two-layer structure of silicon and carbon.

A coin-shaped battery was prepared using the above-prepared film negative electrode, and properties thereof were evaluated by the procedure of Example 1. The results are shown in Table 2.

[Table 1]

| Sample | Element Z type | $Si_oZ_p$ compound | Example of stoichiometric compound | | Z-concentration ratio Q(Z) | Composition of $SiZ_xM_y$ thin film Atomic ratio | | | Raman values of $SiZ_xM_y$ thin film | | | | XIsz of $SiZ_xM_y$ determined by X-ray diffraction | Film thickness (μm) |
|---|---|---|---|---|---|---|---|---|---|---|---|---|---|---|
| | | | Type | Melting point (t) | | Si | Z | O | RC | RSC | RSN | RS | | |
| Exemple 1 | C | SiC | SiC | 2545 | 0.49 | 1.00 | 0.33 | 0.04 | 0.05 | no peak | - | 0.55 | 0.38 | 5 |
| Exemple2 | C | SiC | SiC | 2545 | 0.13 | 1.00 | 0.07 | 0.08 | no peak | no peak | - | 0.45 | 0.15 | 5 |
| Example3 | C | SiC | SiC | 2545 | 0.63 | | 0.45 | 0.06 | 0.09 | 0.13 | - | 0.59 | 0.60 | 5 |
| Example4 | C | SiC | SiC | 2545 | 0.43 | 1.00 | 0.28 | 0.26 | 0.10 | 0.15 | - | 0.60 | 0.38 | 4 |
| Example5 | C | SiC | SiC | 2545 | 0.57 | 1.00 | 0.40 | 0.42 | 0.11 | 0.17 | - | 0.68 | 0.73 | 5 |
| Example6 | N | SiN | $Si_3N_4$ | 1900 | 0.68 | 1.00 | 0.51 | 0.02 | - | - | 0.44 | 0.72 | 0.91 | 6 |
| Exemple7 | N | SiN | $Si_3N_4$ | 1900 | 0.82 | 1.00 | 0.70 | 0.02 | - | - | 0.69 | 0.79 | 0.94 | 6 |
| Example8 | N | SiN | $Si_3N_4$ | 1900 | 0.43 | 1.00 | 0.27 | 0.06 | - | - | 0.17 | 0.57 | 0.94 | 6 |
| Example9 | N | SiN | $Si_3N_4$ | 1900 | 0.42 | 1.00 | 0.26 | 0.06 | - | - | 0.15 | 0.55 | 0.95 | 6 |
| Example10 | B | $SiB_3$ | $SiB_6$ | 1850 | 0.47 | 1.00 | 0.54 | 0.02 | - | - | - | - | 0.46 | 5 |
| Example11 | B | $SiB_3$ | $SiB_6$ | 1850 | 0.57 | 1.00 | 0.74 | 0.02 | - | - | - | - | 0.46 | 6 |
| Example12 | B | $SiB_3$ | $SiB_6$ | 1850 | 0.71 | 1.00 | 1.15 | 0.02 | - | - | - | - | 0.64 | 6 |
| Example13 | C,N | SiC,SiN | $SiC,Si_3N_4$ | 2545,1900 | 0.58 | 1.00 | 0.09,0.27 | 0.06 | no peak | no peak | 0.16 | 0.56 | 0.14,0.92 | 6 |

| Sample | Element Z type | $Si_oZ_p$ compound | Example of stoichiometric compound | | Z-concentration ratio Q(Z) | Composition of $SiZ,M_y$ thin film Atomic ratio | | | Raman values of $SiZ_xM_y$ thin film | | | | XIsz of $SiZ_xM_y$ determined by X-ray diffraction | Film thickness (μm) |
|---|---|---|---|---|---|---|---|---|---|---|---|---|---|---|
| | | | Type | Melting point (t) | | Si | Z | O | RC | RSC | RSN | RS | | |
| Exemple14 | N I | SiN | $Si_3N_4$ | 1900 | 0.37 | 1.00 | 0.23 | 0,08 | - | - | 0.13 | 0.55 | 0.94 | 4 |
| Example15 | N | SiN | $Si_3N_4$ | 1900 | 0.48 | 1.00 | 0.32 | 0,07 | - | - | 0.23 | 0.61 | 0.92 | 5 |
| Comparative (si) Exemple1 | (Si) | (Si) | (Si) | (1414) | (0.00) | 1.00 | (0.00) | 0.02 | no peak | no peak | 0.09 | 0.30 | - | 5 |
| Comparative Example2 | (O) | $(SiO_2)$ | $(SiO_2)$ | (1726) | (0.85) | 1.00 | (0.00) | 1.33 | 0.17 | 0.06 | 0.10 | 1.09 | - | 8 |
| Comparative Example3 | (Ni) | $(NiSi_2)$ | $(Ni_2Si)$ | (1306) | (0.79) | 1.00 | (0.35) | 0.06 | no peak | 0.04 | 0.07 | 0.28 | - | 8 |
| Comparative Example4 | (Cu) | $(Cu_3Si)$ $(Cu_3Si)$ | $(Cu_3Si)$ | (859) | (0.35) | 1.00 | (0.36) * | 0.03 | no peak | no peak | 0.09 | 0.34 | - | 6 |
| Comparative Exemple5 | (Co) | $(CoSi_2)$ | (CoSi) | 1480 | (0.54) | 1.00 | (0.22) | 0.01 | - | - | - | - | - | 6 |
| Comparative Example6 | C.(O) | SiC | SiC | 2545 | 0.81 | 1.00 | 0.68 | 0.83 | 2.69 | 0.35 | - | 0.84 | 0.77 | 5 |
| Comparative Example7 | C | SiC | SiC | 2545 | 1.55 | 1.00 | 3.45 | 0.55 | 27.70 | 1,05 | - | 0.38 | 0.42 | 5 |
| Comparative Example8 | C | SiC | SiC | 2545 | 0,06 | 1.00 | 0.03 | 0.06 | no peak | no peak | - | 0.41 | 0.13 | 5 |

EP 1 772 915 B1

35

(continued)

| Sample | Element Z type | $Si_oZ_p$ compound | Example of stoichiometric compound | | Z-concentration ratio Q(Z) | Composition of $SiZ_xM_y$ thin film Atomic ratio | | | Raman values of $SiZ_xM_y$ thin film | | | | Xlsz of $SiZ_xM_y$ determined by X-ray diffraction | Film thickness ($\mu$m) |
| | | | Type | Melting point (t) | | Si | Z | O | RC | RSC | RSN | RS | | |
|---|---|---|---|---|---|---|---|---|---|---|---|---|---|---|
| Comparative Example9 | N | SiN | $Si_3N_4$ | 1900 | 1.07 | 1.00 | 1.15 | 0.02 | - | - | not detected | not detected | 1.18 | 7 |
| Comparative Example10 | N | SiN | $Si_3N_4$ | 1900 | 0,02 | 1.00 | 0.01 | 0.01 | - | - | 0.08 | 0.31 | 0.98 | 5 |
| Comparative Example11 | B | $SiB_3$ | $SiB_6$ | 1850 | 0.98 | 1.00 | 2.81 | 0.04 | - | - | - | - | 1.10 | 6 |
| Comparative Example12 | B | $SiB_3$ | $SiB_6$ | 1850 | 0.08 | 1.00 | 0.05 | 0.02 | - | - | - | - | 0.10 | 5 |
| Comparative Example13 | (C) | - | - | - | - | 1.00 | 0.26 | - | - | - | - | - | * | 5 |
| Note: The elements and values indicated in parentheses are those not corresponding to an element Z. | | | | | | | | | | | | | | |

EP 1 772 915 B1

36

Table 2

| Sample | Battery properties | | | | | | Remarks |
|---|---|---|---|---|---|---|---|
| | Discharging capacity (mAh/g) | Charging/discharging efficiency (%) | Maintenance factor in cyclic operation (A) (%) | Charging/discharging efficiency upon fiftieth cycle (%) | Expansion of electrode after cyclic operation (A) | IRsc after cyclic operation (A) | |
| Exemple1 | 2660 | 92 | 75 | 100 | 3.4 | 1.5 | within the scope of the invention |
| Example2 | 2950 | 93 | 60 | 98 | 3.7 | 1.3 | within the scope of the invention |
| Example3 | 2490 | 92 | 83 | 100 | 3.3 | 1.6 | within the scope of the invention |
| Example4 | 1990 | 85 | 80 | 99 | 3.5 | 1.5 | within the scope of the invention |
| Example5 | 1570 | 75 | 90 | 100 | 3.0 | 1.2 | within the scope of the invention |
| Exemple6 | 2660 | 89 | 89 | 100 | 2.8 | - | within the scope of the invention |
| Example7 | 1770 | 80 | 90 | 100 | 2.8 | - | within the scope of the invention |
| Example8 | 3300 | 92 | 60 | 98 | 3.4 | - | within the scope of the invention |
| Example9 | 3200 | 91 | 58 | 98 | 3.7 | - | within the scope of the invention |
| Example10 | 2700 | 91 | 54 | 97 | 4.2 | - | within the scope of the invention |
| Example11 | 3340 | 92 | 56 | 97 | 4.1 | - | within the scope of the invention |
| Example12 | 3250 | 92 | 50 | 96 | 4.3 | - | within the scope of the invention |
| Example13 | 3110 | 92 | 60 | 98 | 3.6 | - | within the scope of the invention |

(continued)

| Sample | Battery properties | | | | Expansion of electrode after cyclic operation (A) | IRsc after cyclic operation (A) | Remarks |
|---|---|---|---|---|---|---|---|
| | Discharging capacity (mAh/g) | Charging/discharging efficiency (%) | Maintenance factor in cyclic operation (A) (%) | Charging/discharging efficiency upon fiftieth cycle (%) | | | |
| Example14 | 2820 | 90 | 56 | 97 | 3.9 | - | within the scope of the invention |
| Example15 | 2710 | 90 | 65 | 99 | 3.2 | - | within the scope of the invention |
| Comparative Example1 | 3960 | 93 | 40 | 97 | 11.0 | 0.8 | containing no element Z |
| Comparative Example2 | 960 | 44 | 98 | 100 | 2.9 | - | containing no element Z but oxygen |
| Comparative Example3 | 2540 | 91 | 2 | (98) | 4.5 | - | containing no element Z but nickel |
| Comparative Example4 | 2070 | 88 | 8 | (98) | 4.0 | - | containing no element Z but copper |
| Comparative Example5 | 2730 | 92 | 30 | 97 | 5.0 | - | containing no element Z but cobalt |
| Comparative Example6 | 260 | 50 | 62 | 88 | 1.2 | - | containing element Z but excessive oxygen |
| Comparative Example7 | 340 | 80 | 60 | 100 | 1.4 | - | excessively large amount of element Z |
| Comparative Example8 | 3400 | 93 | 35 | 97 | 5.8 | - | excessively small amount of element Z |

| Sample | Battery properties | | | | Expansion of electrode after cyclic operation (A) | IRsc after cyclic operation (A) | Remarks |
|---|---|---|---|---|---|---|---|
| | Discharging capacity (mAh/g) | Charging/discharging efficiency (%) | Maintenance factor in cyclic operation (A) (%) | Charging/discharging efficiency upon fiftieth cycle (%) | | | |
| Comparative Example9 | not charging/discharging | | | | - | - | excessively large amount of element Z |
| Comparative Exemple10 | 3890 | 93 | 5 | (98) | 7.2 | - | excessively small amount of element Z |
| Comparative Example11 | 2630 | 88 | 39 | 95 | 5.3 | - | excessively large amount of element Z |
| Comparative Example12 | 3210 | 91 | 1 | (100) | 6.2 | - | excessively small amount of element Z |
| Comparative Example13 | 3210 | 93 | 40 | 97 | 8.7 | - | heterogenous distribution of element Z |

EP 1 772 915 B1

Tables 1 and 2 demonstrate the followings.

The active material thin film of the negative electrode prepared according to Comparative Example 1 is a silicon thin film continuously deposited from a current collector, but it does not contain the element Z and does not satisfy requirements specified in the present invention. As a result, the battery fails to exhibit good properties in cyclic operation, and its electrode significantly expands after cyclic-operation.

The active material thin film of the negative electrode prepared according to Comparative Example 2 is a SiO thin film continuously deposited from a current collector and mainly contains a phase containing oxygen element lying in a nonequilibrium state in silicon. The thin film, however, does not contain a component corresponding to an element Z and does not satisfy requirements specified in the present invention. The resulting battery exhibits a poor charging/discharging efficiency and fails to exhibit good battery properties with high capacity.

The active material thin film of the negative electrode prepared according to Comparative Example 3 is a silicon/nickel thin film continuously deposited from a current collector. This thin film mainly contains a phase including nickel element lying in a nonequilibrium state in silicon. The thin film, however, does not contain a component corresponding to an element Z and thereby does not satisfy requirements specified in the present invention. The resulting battery fails to exhibit good properties in cyclic operation.

The active material thin film of the negative electrode prepared according to Comparative Example 4 is a silicon/copper thin film continuously deposited from a current collector. The thin film mainly contains a phase including copper element lying in a non-equilibrium state in silicon. The thin film, however, does not contain a component corresponding to an element Z and thereby does not satisfy requirements specified in the present invention. The resulting battery fails to exhibit good properties in cyclic operation.

The active material thin film of the negative electrode prepared according to Comparative Example 5 is a silicon/cobalt thin film continuously deposited from a current collector, which thin film mainly contains a phase including cobalt element lying in a nonequilibrium state in silicon. The thin film, however, does not contain a component corresponding to an element Z and thereby does not satisfy requirements specified in the present invention. The resulting battery fails to exhibit good properties in cyclic operation.

The active material thin film of the negative electrode prepared according to Comparative Example 6 is a silicon/carbon/oxygen thin film which is continuously deposited from a current collector and mainly contains a phase including carbon element lying in a nonequilibrium state in silicon. The thin film, however, has an oxygen concentration exceeding the range as specified in the present invention and thereby fails to exhibit advantages derived from silicon, in which carbon alone contributes to charging/discharging action. In addition, the thin film contains oxygen in a large amount. The resulting battery thereby exhibits a low charging/discharging efficiency and fails to exhibit good battery properties with high capacity.

The active material thin film of the negative electrode prepared according to Comparative Example 7 is a silicon/carbon/oxygen thin film which is continuously deposited from a current collector and mainly contains a phase including carbon element lying in a nonequilibrium state in silicon. The thin film, however, contains carbon element in an amount largely exceeding the range as specified in the present invention. The thin film thereby fails to exhibit advantages derived from silicon, in which carbon alone contributes to charging/discharging action. The resulting battery exhibits a low charging/discharging efficiency and fails to exhibit good battery properties with high capacity.

The active material thin film of the negative electrode prepared according to Comparative Example 8 is a silicon/carbon/oxygen thin film which is continuously deposited from a current collector and mainly contains a phase including carbon element lying in a nonequilibrium state in silicon. The thin film, however, contains carbon element in an amount below the range as specified in the present invention, thereby shows little advantages due to the presence of carbon. The resulting electrode expands largely, and the battery fail to exhibit good properties in cyclic operation.

The active material thin film of the negative electrode prepared according to Comparative Example 9 is a silicon/nitrogen thin film which is continuously deposited from a current collector and mainly contains a phase including nitrogen element lying in a nonequilibrium state in silicon. The thin film, however, contains nitrogen element in an amount exceeding the range as specified in the present invention, thereby partially includes $Si_3N_4$, and the battery does not work to charge/discharge.

The active material thin film of the negative electrode prepared according to Comparative Example 10 is a silicon/nitrogen thin film which is continuously deposited from a current collector and mainly contains a phase including nitrogen element lying in a nonequilibrium state in silicon. The thin film, however, contains nitrogen element in an amount below the range as specified in the present invention. The battery thereby shows a large expansion of its electrode and fails to exhibit good properties in cyclic operation.

The active material thin film of the negative electrode prepared according to Comparative Example 11 is a silicon/boron thin film which is continuously deposited from a current collector and mainly contains a phase including boron element lying in a nonequilibrium state in silicon. The thin film, however, contains boron element in an amount exceeding the range as specified in the present invention, and the resulting battery fails to exhibit good properties in cyclic operation.

The active material thin film of the negative electrode prepared according to Comparative Example 12 is a silicon/boron thin film which is continuously deposited from a current collector and mainly contains a phase including boron element lying in a nonequilibrium state in silicon. The thin film, however, contains boron element in an amount exceeding the range as specified in the present invention, the electrode thereby expands largely, and the battery fails to exhibit good properties in cyclic operation.

The active material thin film of the negative electrode prepared according to Comparative Example 13 includes carbon and silicon elements with an atomic concentration ratio within the range as specified in the present invention. The thin film, however, contains carbon lying on the surface of a silicon thin film and thereby has a heterogenous distribution of carbon. The resulting electrode expands largely and the battery fails to exhibit good properties in cyclic operation.

In contrast to these, the active material thin films of the film negative electrodes prepared in Examples 1 to 15 according to the present invention each include a specific compound $SiZ_xM_y$ which mainly contains a phase including an element Z lying in a nonequilibrium state in silicon, in which the element Z is at least one element selected from the group consisting of boron, carbon, and nitrogen. Each of these satisfies the requirements as specified in the present invention. The resulting batteries using these film negative electrodes exhibit high performance, have high discharging capacities, exhibit high charging/discharging efficiencies in the initial stage and during cyclic operation and show excellent properties in cyclic operation, and the electrodes of which show less expansion after cyclic operation.

[EXAMPLE 16]

A lithium secondary battery was prepared according to the following method using the film negative electrode deposited according to Example 1 and a liquid electrolyte further containing vinylene carbonate (VC). The following property in cyclic operation (B) of this battery was evaluated. As a result, the battery showed a maintenance factor in cyclic operation (B) of 77% after cyclic operation of 120 cycles.

<Method of preparing lithium secondary battery>

The prepared film negative electrode was punched to a diameter of 10 mm, was dried at 85°C in a vacuum, was transferred to a glove box, and was assembled with a liquid electrolyte, a separator, and a counter electrode in an argon atmosphere into a coin-shaped battery (lithium secondary battery). The liquid electrolyte used herein was a 1 mol/L-LiPF$_6$ liquid electrolyte in a solvent of a 3:7 (by weight) mixture of ethylene carbonate (EC) and diethyl carbonate (DEC), further containing 2 percent by weight of VC. The separator was a glass nonwoven fabric separator. The counter electrode was a lithium-cobalt positive electrode.

<Evaluation of property in cyclic operation (B)>

A cyclic operation herein includes the procedures of charging the lithium-cobalt positive electrode to 4.2 V at a current density of 1.53 mA/cm$^2$; further charging the lithium-cobalt positive electrode to a current of 0.255 mA at a constant voltage of 4.2 V; thereby doping the negative electrode with lithium; and discharging the lithium-cobalt positive electrode to 2.5 V at a current density of 1.53 mA/cm$^2$. This charging/discharging cyclic operation was repeated a total of one hundred and twenty times (120 cycles), and a maintenance factor in cyclic operation (B) was calculated according to the following equation:

$$\text{Maintenance factor in cyclic operation (B) (\%)}$$
$$= [\text{(Discharging capacity after cyclic operation of 120}$$
$$\text{cycles (mAh))/(Discharging capacity of cyclic operation of}$$
$$\text{third cycle) (mAh)}] \times 100$$

[EXAMPLE 17]

A coin-shaped battery was prepared and the property in cyclic operation (B) was evaluated by the procedure of Example 16, except for using a liquid electrolyte containing a 3:7 (by weight) mixture of ethylene carbonate (EC) and diethyl carbonate (DEC) without the addition of VC. The battery was found to have a maintenance factor in cyclic operation (B) of 67%.

The results in Examples 16 and 17 are shown in Table 3. Table 3 demonstrates that batteries can have further improved properties in cyclic operation by using, in film negative electrodes according to the present invention, a nonaqueous liquid electrolyte containing a cyclic carbonic ester compound intramolecularly having an unsaturated bond.

[Table 3]

|  | Liquid electrolyte | Maintenance factor in cyclic operation (B) % |
|---|---|---|
| Example 16 | EC+DEC+VC | 77 |
| Example 17 | EC+DEC | 67 |

## Claims

1. A negative electrode for a nonaqueous electrolyte secondary battery, comprising a 1-30 $\mu$m thick active material thin film, the active material thin film mainly containing a compound represented by the general formula SiZxMy and lying in a non-equilibrium state where SiZxMy does not constitute a specific stoichiometric compound, wherein Z, M, "x" and "y" satisfy the following conditions:

   the element Z is at least one element selected from the group consisting of boron (B), carbon (C), and nitrogen (N); the element M is at least one of Cu, Ni and O; "x" is a value such that a Z-concentration ratio Q(Z) falls within the range of 0.10 to 0.95, the Z-concentration ratio Q(Z) being calculated with respect to the Z-concentration (p/(a+p)) of SiaZp according to the following equation:

$$Q(Z) = [x/(1+x)]/[p/(a+p)]$$

   whereby SiaZp represents $SiB_3$ when Z is B, SiC when Z is C and SiN when Z is N, or where two or more different elements are used in combination as the element Z, then Z-concentration ratios Q(Z) are determined for each element Z and the total of the Z-concentration ratios is regarded as the Z-concentration ratio Q(Z); and "y" is a number satisfying the following condition:

$$0 \leq y \leq 0.5.$$

2. The negative electrode for a nonaqueous electrolyte secondary battery according to Claim 1, comprising a current collector and the active material thin film, wherein the active material thin film is arranged continuously from the current collector.

3. The negative electrode for a nonaqueous electrolyte secondary battery according to Claim 1, wherein the element Z is carbon (C); and "x" is a number satisfying the following condition: $0.053 \leq x \leq 0.70$ in the general formula SiZxMy, and wherein the active material thin film comprises a silicon thin film, and the carbon element uniformly distributed in the silicon thin film.

4. The negative electrode for a nonaqueous electrolyte secondary battery according to Claim 3, wherein the active material thin film has a Raman "RC" value of 0.0 or more and 2.0 or less and a Raman "RCS" value of 0.0 or more and 0.25 or less as determined by Raman spectroscopic analysis.

5. The negative electrode for a nonaqueous electrolyte secondary battery according to Claim 3, wherein the active material thin film has a Raman "RS" value of 0.40 or more and 0.75 or less as determined by Raman spectroscopic analysis.

6. The negative electrode for a nonaqueous electrolyte secondary battery according to Claim 3, wherein the element Z is carbon (C); the element M is oxygen (O); and "x" and "y" are numbers satisfying the following conditions: 0.053 $\leq$ x $\leq$ 0.70 and 0 < y $\leq$ 0.50, respectively, in the general formula SiZxMy.

7.  The negative electrode for a nonaqueous electrolyte secondary battery according to Claim 3, wherein the active material thin film has an "IRsc" value of 0.9 or more and 3.0 or less as determined after carrying out charging/ discharging by infrared transmission photometric analysis using an infrared spectrophotometer.

8.  The negative electrode for a nonaqueous electrolyte secondary battery according to Claim 1, wherein the element Z in the general formula SiZxMy is nitrogen (N), and wherein "x" in a general formula SiNxMy is such a value that the Z-concentration ratio Q(Z) is in the range of 0.15 to 0.85.

9.  The negative electrode for a nonaqueous electrolyte secondary battery according to Claim 8, wherein the active material thin film comprises a silicon thin film, and the nitrogen element uniformly distributed in the silicon thin film.

10.  The negative electrode for a nonaqueous electrolyte secondary battery according to Claim 8, wherein the active material thin film has a Raman "RSN" value of 0.0 or more and 0.9 or less as determined by Raman spectroscopic analysis.

11.  The negative electrode for a nonaqueous electrolyte secondary battery according to Claim 8, wherein the active material thin film has a Raman "RS" value of 0.4 or more and 1.0 or less as determined by Raman spectroscopic analysis.

12.  The negative electrode for a nonaqueous electrolyte secondary battery according to Claim 8, wherein the active material thin film has an "XIsz" value of 0.00 or more and 1.10 or less as determined by X-ray diffraction.

13.  The negative electrode for a nonaqueous electrolyte secondary battery according to Claim 1, wherein the element Z in the general formula SiZxMy is boron (B), and wherein "x" in a general formula SiBxMy is such a value that the Z-concentration ratio Q(Z) is in the range of 0.30 to 0.85.

14.  The negative electrode for a nonaqueous electrolyte secondary battery according to Claim 13, wherein the active material thin film comprises a silicon thin film, and the boron element uniformly distributed in the silicon thin film.

15.  The negative electrode for a nonaqueous electrolyte secondary battery according to Claim 13, wherein the active material thin film has an "XIsz" value of 0.00 or more and 0.90 or less as determined by X-ray diffraction.

16.  A method of producing a negative electrode for a nonaqueous electrolyte secondary battery, the secondary battery including a current collector and an active material thin film arranged adjacent to the current collector, the active material thin film mainly containing a compound represented by a general formula SiZxMx, wherein Z, M, "x" and "y" satisfy the following conditions, the method comprising the steps of:

    using a source containing silicon, the element Z, and the element M as one of an evaporation source, a sputtering source, and a thermal spraying source; and
    carrying out depositions of silicon, the element Z, and the element M concurrently according to at least one technique selected from vapor deposition, sputtering, and thermal spraying to thereby deposit a film of the compound to a thickness of 1 to 30 $\mu$m on a current collector substrate,
    wherein the element Z is at least one element selected from the group consisting of boron (B), carbon (C), and nitrogen (N);
    the element M is at least one of Cu, Ni and O; "x" is such a value that a Z-concentration ratio Q(Z) falls within the range of 0.10 to 0.95, the Z-concentration ratio Q(Z) being calculated with respect to the Z-concentration $(p/(a+p))$ of $Si_aZ_p$ according to the following equation:

$$Q(Z) = \{x/(1+x)\}/\{p/(a+p)\}$$

    whereby $Si_aZ_p$ represents $SiB_3$ when Z is B, SiC when Z is C and SiN when Z is N, or where two or more different elements are used in combination as the element Z, then Z-concentration ratios Q(Z) are determined for each element Z and the total of the Z-concentration ratios is regarded as the Z-concentration ratio Q(Z); and

"y" is a number satisfying the following condition:

$$0 \leq y \leq 0.5.$$

17. The method of producing a negative electrode for a nonaqueous electrolyte secondary battery according to Claim 16, wherein the element Z is carbon (C) and "x" and "y" satisfy the following conditions: $0.053 \leq x \leq 0.70$ and $0 < y \leq 0.50$ in the general formula SiZxMy,
wherein a source containing silicon (Si), carbon (C), and the element M is used as one of an evaporation source, a sputtering source, and a thermal spraying source, and
wherein depositions of silicon, carbon, and the element M are carried out concurrently according to at least one technique selected from vapor deposition, sputtering, and thermal spraying, to thereby deposit a film of the compound to a thickness of 1 to 30 $\mu$m on the current collector substrate.

18. The method of producing a negative electrode for a nonaqueous electrolyte secondary battery according to Claim 16, wherein the element Z is carbon (C); and "x" satisfies the following condition: $0.053 \leq x \leq 0.70$, and "y" is equal to zero or nearly equal to zero in the general formula SiZxMy,
wherein a source containing silicon and carbon is used as one of an evaporation source, a sputtering source, and a thermal spraying source, and
wherein depositions of silicon and carbon are carried out concurrently according to at least one technique selected from vapor deposition, sputtering, and thermal spraying, to thereby deposit a film of the compound to a thickness of 1 to 30 $\mu$m on the current collector substrate.

19. A nonaqueous electrolyte secondary battery comprising a positive electrode, a negative electrode, and an electrolyte, the positive and negative electrodes each capable of occluding/releasing lithium ion, wherein the negative electrode is the negative electrode for a nonaqueous electrolyte secondary battery according to Claim 1.

20. The nonaqueous electrolyte secondary battery according to Claim 19, wherein the electrolyte comprises a nonaqueous liquid electrolyte, the nonaqueous liquid electrolyte containing a cyclic carbonic ester compound intramolecularly having an unsaturated bond.

**Patentansprüche**

1. Negative Elektrode für eine Sekundärbatterie mit nicht-wässrigen Elektrolyten, die einen 1 bis 30 $\mu$m dicken Aktivmaterial-Dünnfilm umfasst, wobei der Aktivmaterial-Dünnfilm hauptsächlich eine Verbindung der allgemeinen Formel SiZxMy enthält und in einem Nicht-Gleichgewichtszustand vorliegt, in dem $SiZ_xM_y$ keine spezielle stöchiometrische Verbindung darstellt,
worin Z, M, "x" und "y" die folgenden Bedingungen erfüllen:

das Element Z ist mindestens ein Element ausgewählt aus der Gruppe bestehend aus Bor (B), Kohlenstoff (C) und Stickstoff (N);
das Element M ist mindestens eines aus Cu, Ni und O;
"x" ist ein Wert, so dass ein Z-Konzentrationsverhältnis Q(Z) in den Bereich von 0,10 bis 0,95 fällt, wobei das Z-Konzentrationsverhältnis Q(Z) in Bezug auf die Z-Konzentration (p/(a+p)) von $Si_aZ_p$ gemäß der folgenden Gleichung berechnet wird:

$$Q(Z) = [x/(1+x)] / [p/(a+p)]$$

wobei $Si_aZ_p$ $SiB_3$ darstellt, falls Z B ist, SiC falls Z C ist und SiN falls Z N ist, oder falls zwei oder mehrere verschiedene Elemente in Kombination als das Element Z eingesetzt werden, die Z-Konzentrationsverhältnisse Q(Z) für jedes Element Z bestimmt werden und die Gesamtheit der Z-Konzentrationsverhältnisse als das Z-Konzentrationsverhältnis Q(Z) betrachtet wird; und
"y" ist eine Zahl, die die folgende Gleichung erfüllt:

$$0 \leq y \leq 0,5.$$

2. Negative Elektrode für eine Sekundärbatterie mit nicht-wässrigen Elektrolyten gemäß Anspruch 1, die einen Stromkollektor und den Aktivmaterial-Dünnfilm umfasst, worin der Aktivmaterial-Dünnfilm vom Stromkollektor aus kontinuierlich angeordnet ist.

3. Negative Elektrode für eine Sekundärbatterie mit nicht-wässrigem Elektrolyten gemäß Anspruch 1, worin das Element Z Kohlenstoff (C) ist; und "x" eine Zahl ist, die die folgende Bedingung erfüllt: $0,053 \leq x \leq 0,70$ in der allgemeinen Formel $SiZ_xM_y$, und worin der Aktivmaterial-Dünnfilm einen Silizium-Dünnfilm umfasst und das Element Kohlenstoff gleichförmig im Silizium-Dünnfilm verteilt ist.

4. Negative Elektrode für eine Sekundärbatterie mit nicht-wässrigem Elektrolyten gemäß Anspruch 3, worin der Aktivmaterial-Dünnfilm einen Raman-"RC"-Wert von 0,0 oder mehr und 2,0 oder weniger und einen Raman-"RCS"-Wert von 0,0 oder mehr und 0,25 oder weniger hat, wie durch Raman-spektroskopische Analyse bestimmt.

5. Negative Elektrode für eine Sekundärbatterie mit nicht-wässrigem Elektrolyten gemäß Anspruch 3, worin der Aktivmaterial-Dünnfilm einen Raman-"RS"-Wert von 0,40 oder mehr und 0,75 oder weniger hat, wie durch Raman-spektroskopische Analyse bestimmt.

6. Negative Elektrode für eine Sekundärbatterie mit nicht-wässrigem Elektrolyten gemäß Anspruch 3, worin das Element Z Kohlenstoff (C) ist; das Element M Sauerstoff (O) ist; und "x" und "y" Zahlen sind, die die folgenden Bedingungen erfüllen: $0,053 \leq x \leq 0,70$ bzw. $0 < y \leq 0,50$, in der allgemeinen Formel $SiZ_xM_y$.

7. Negative Elektrode für eine Sekundärbatterie mit nicht-wässrigem Elektrolyten gemäß Anspruch 3, worin der Aktivmaterial-Dünnfilm einen "IRsc"-Wert von 0,9 oder mehr und 3,0 oder weniger hat, gemessen nach Durchführung eines Lade-/Entladevorgangs durch Infrarottransmissionsphotometrische Analyse unter Verwendung eines Infrarotspektrophotometers.

8. Negative Elektrode für eine Sekundärbatterie mit nicht-wässrigem Elektrolyten gemäß Anspruch 1, worin das Element Z in der allgemeinen Formel $SiZ_xM_y$ Stickstoff (N) ist, und worin "x" in der allgemeinen Formel $SiZ_xM_y$ ein solcher Wert ist, das das Z-Konzentrationsverhältnis Q(Z) im Bereich von 0,15 bis 0,85 liegt.

9. Negative Elektrode für eine Sekundärbatterie mit nicht-wässrigem Elektrolyten gemäß Anspruch 8, worin der Aktivmaterial-Dünnfilm einen Silizium-Dünnfilm umfasst, und das Element Stickstoff gleichförmig im Silizium-Dünnfilm verteilt ist.

10. Negative Elektrode für eine Sekundärbatterie mit nicht-wässrigem Elektrolyten gemäß Anspruch 8, worin der Aktivmaterial-Dünnfilm einen Raman-"RSN"-Wert von 0,0 oder mehr und 0,9 oder weniger hat, wie durch Raman-spektroskopische Analyse bestimmt.

11. Negative Elektrode für eine Sekundärbatterie mit nicht-wässrigem Elektrolyten gemäß Anspruch 8, worin der Aktivmaterial-Dünnfilm einen Raman-"RS"-Wert von 0,4 oder mehr und 1,0 oder weniger hat, wie durch Raman-spektroskopische Analyse bestimmt.

12. Negative Elektrode für eine Sekundärbatterie mit nicht-wässrigem Elektrolyten gemäß Anspruch 8, worin der Aktivmaterial-Dünnfilm einen "XIsz"-Wert von 0,00 oder mehr und 1,10 oder weniger hat, wie durch Röntgenbeugung bestimmt.

13. Negative Elektrode für eine Sekundärbatterie mit nicht-wässrigem Elektrolyten gemäß Anspruch 1, worin das Element Z in der allgemeinen Formel $SiZ_xM_y$ Bor (B) ist und worin "x" in der allgemeine Formel $SiB_xM_y$ ein solcher wert ist, dass das Z-Konzentrationsverhältnis Q(Z) im Bereich von 0,30 bis 0,85 liegt.

14. Negative Elektrode für eine Sekundärbatterie mit nicht-wässrigem Elektrolyten gemäß Anspruch 13, worin der Aktivmaterial-Dünnfilm einen Silizium-Dünnfilm umfasst, und das Element Bor gleichförmig im Silizium-Dünnfilm verteilt ist.

**15.** Negative Elektrode für eine Sekundärbatterie mit nicht-wässrigem Elektrolyten gemäß Anspruch 13, worin der Aktivmaterialdünnfilm einen "XIsz"-Wert von 0,00 oder mehr und 0,90 oder weniger hat, wie durch Röntgenbeugung bestimmt.

**16.** Verfahren zur Herstellung einer negativen Elektrode für eine Sekundärbatterie mit nicht-wässrigem Elektrolyten, wobei die Sekundärbatterie einen Stromkollektor und einen zum Stromkollektor benachbart angeordneten Aktivmaterial-Dünnfilm beinhaltet, der Aktivmaterial-Dünnfilm hauptsächlich eine Verbindung der allgemeinen Formel $SiZ_xM_y$ enthält, worin Z, M, "x" und "y" die folgenden Bedingungen erfüllen, und das Verfahren die Schritte umfasst:

Verwendung einer Quelle, die Silizium, das Element Z und das Element enthält, als eine aus einer Verdampfungs-Quelle, einer Sputter-Quelle und einer thermischen Spray-Quelle; und

gleichzeitige Durchführung der Abscheidung von Silizium, dem Element Z und dem Element M gemäß mindestens einer Methode ausgewählt aus Gasphasenabscheidung, Sputtern und thermischem Spraying, um so einen Film der Verbindung mit einer Dicke von 1 bis 30 μm auf einem Stromkollektorsubstrat abzuscheiden,

worin das Element Z mindestens ein Element ausgewählt aus der Gruppe bestehend aus Bor (B), Kohlenstoff (C) und Stickstoff (N) ist;

das Element M mindestens eines aus Cu, Ni und O ist;

"x" ein Wert ist, so dass ein Z-Konzentrationsverhältnis Q(Z) in dem Bereich von 0,10 bis 0,95 fällt, wobei das Z-Konzentrationsverhältnis Q(Z) in Bezug auf die Z-Konzentration (p/(a+p)) von $Si_aZ_p$ gemäß der folgenden Gleichung berechnet wird:

$$Q(Z) = [x/(1+x)]/[p/(a+p)]$$

wobei $Si_aZ_p$ $SiB_3$ darstellt, falls Z B ist, SiC falls Z C ist und SiN falls Z N ist, oder falls zwei oder mehrere verschiedene Elemente in Kombination als das Element Z eingesetzt werden, die Z-Konzentrationsverhältnisse Q(Z) für jedes Element Z bestimmt werden und die Gesamtheit der Z-Konzentrationsverhältnisse als das Z-Konzentrationsverhältnis Q(Z) betrachtet wird; und

"y" eine Zahl ist, die die folgende Gleichung erfüllt:

$$0 \leq y \leq 0,5.$$

**17.** Verfahren zur Herstellung einer negativen Elektrode für eine Sekundärbatterie mit nicht-wässrigem Elektrolyten gemäß Anspruch 16,

worin in der allgemeinen Formel $SiZ_xM_y$ das Element Z Kohlenstoff (C) ist und "x" und "y" die folgenden Bedingungen erfüllen: $0,053 \leq x \leq 0,70$ und $0 < y \leq 0,50$,

worin eine Quelle, die Silizium (Si), Kohlenstoff (C) und das Element M enthält, als eine aus einer Verdampfungs-Quelle, einer Sputter-Quelle und einer thermischen Spray-Quelle verwendet wird und

worin die Abscheidungen von Silizium, Kohlenstoff und dem Element M gleichzeitig gemäß mindestens einer Methode ausgewählt aus Gasphasenabscheidung, Sputtern und thermischem Spraying durchgeführt werden, um so einen Film der Verbindung mit einer Dicke von 1 bis 30 μm auf dem Stromkollektorsubstrat abzuscheiden.

**18.** Verfahren zur Herstellung einer negativen Elektrode für eine Sekundärbatterie mit nicht-wässrigem Elektrolyten gemäß Anspruch 16,

worin in der allgemeinen Formel $SiZ_xM_y$ das Element Z Kohlenstoff (C) ist und "x" die folgende Bedingung erfüllt: $0,053 \leq x \leq 0,70$, und "y" gleich null oder annähernd gleich null ist,

worin eine Quelle, die Silizium und Kohlenstoff enthält, als eine aus einer Verdampfungs-Quelle, einer Sputter-Quelle und einer thermischen Spray-Quelle verwendet wird und

worin die Abscheidungen von Silizium und Kohlenstoff gleichzeitig gemäß mindestens einer Methode ausgewählt aus Gasphasenabscheidung, Sputtern und thermischem Spraying durchgeführt werden, um so einen Film der Verbindung mit einer Dicke von 1 bis 30 μm auf dem Stromkollektorsubstrat abzuscheiden.

**19.** Sekundärbatterie mit nicht-wässrigem Elektrolyten, die eine positive Elektrode, eine negative Elektrode und einen Elektrolyten umfasst, wobei die positive und die negative Elektrode jeweils sind der Lage sind, Lithiumionen einzulagern und freizusetzen, worin die negative Elektrode die negative Elektrode für eine Sekundärbatterie mit nicht-wässrigem Elektrolyten gemäß Anspruch 1 ist.

**20.** Sekundärbatterie mit nicht-wässrigem Elektrolyten gemäß Anspruch 19, worin der Elektrolyt einen nicht-wässrigen Flüssigelektrolyten umfasst und der nicht-wässrige Flüssigelektrolyt eine zyklische Kohlensäureesterverbindung enthält, die intramolekular eine ungesättigte Bindung hat.

## Revendications

**1.** Electrode négative pour pile secondaire à électrolyte non aqueux, comprenant une couche mince de matériau actif d'une épaisseur de 1 $\mu$m à 30 $\mu$m, la couche mince de matériau actif contenant principalement un composé représenté par la formule générale SiZxMy et se trouvant dans un état non équilibré où SiZxMy ne constitue pas un composé stoechiométrique spécifique,

Z, M « x » et « y » satisfaisant les conditions suivantes :

l'élément Z est au moins un élément choisi dans le groupe constitué du bore (B), du carbone (C) et de l'azote (N) ;
l'élément M est au moins un élément choisi parmi Cu, Ni et O ;
la valeur de « x » est telle qu'un rapport Q(Z) de concentration de Z se trouve dans la plage allant de 0,10 à 0,95, le rapport Q(Z) de concentration de Z étant calculé par rapport à la concentration de Z (p/(a+p)) de SiaZp selon l'équation suivante :

$$Q(Z) = [x/(1+x)]/[p/(a+p)]$$

moyennant quoi SiaZp représente SiB$_3$ quand Z est B, SiC quand Z est C et SiN quand Z est N, ou si deux ou plus de deux éléments différents sont utilisés en combinaison en tant qu'élément Z, alors les rapports Q(Z) de concentration de Z sont déterminés pour chaque élément Z et le total des rapports de concentration de Z est considéré comme étant le rapport Q(Z) de concentration de Z ; et
« y » est un nombre satisfaisant la condition suivante :

$$0 \leq y \leq 0,5.$$

**2.** Electrode négative pour pile secondaire à électrolyte non aqueux selon la revendication 1, comprenant un collecteur de courant et une couche mince de matériau actif, dans laquelle la couche mince de matériau actif est disposée en continu à partir du collecteur de courant.

**3.** Electrode négative pour pile secondaire à électrolyte non aqueux selon la revendication 1, dans laquelle l'élément Z est un carbone (C) ; et « x » est un nombre satisfaisant la condition suivante $0,053 \leq x \leq 0,70$ dans la formule générale SiZxMy, et dans laquelle la couche mince de matériau actif comprend une couche mince de silicium et l'élément carbone est réparti uniformément dans la couche mince de silicium.

**4.** Electrode négative pour pile secondaire à électrolyte non aqueux selon la revendication 3, dans laquelle la couche mince de matériau actif présente une valeur « RC » Raman supérieure ou égale à 0,0 et inférieure ou égale à 2,0 et une valeur « RCS » Raman supérieure ou égale à 0,0 et inférieure ou égale à 0,25, telles que déterminées par une analyse spectroscopique Raman.

**5.** Electrode négative pour pile secondaire à électrolyte non aqueux selon la revendication 3, dans laquelle la couche mince de matériau actif présente une valeur « RS » Raman supérieure ou égale à 0,40 et inférieure ou égale à 0,75, telle que déterminée par une analyse spectroscopique Raman.

**6.** Electrode négative pour pile secondaire à électrolyte non aqueux selon la revendication 3, dans laquelle l'élément Z est un carbone (C) ; l'élément M est un oxygène (O) ; et « x » et « y » sont des nombres satisfaisant les conditions suivantes : $0,053 \leq x \leq 0,70$ et $0 < y \leq 0,50$, respectivement, dans la formule générale SiZxMy.

**7.** Electrode négative pour pile secondaire à électrolyte non aqueux selon la revendication 3, dans laquelle la couche mince de matériau actif présente une valeur « IRsc » supérieure ou égale à 0,9 et inférieure ou égale à 3,0, telle que déterminée après avoir réalisé un chargement/déchargement par une analyse photométrique par transmission infrarouge au moyen d'un spectrophotomètre infrarouge.

8. Electrode négative pour pile secondaire à électrolyte non aqueux selon la revendication 1, dans laquelle l'élément Z dans la formule générale SiZxMy est un azote (N), et dans laquelle la valeur de « x » dans une formule générale SiNxMy est telle que le rapport Q(Z) de concentration de Z se situe dans la plage allant de 0,15 à 0,85.

9. Electrode négative pour pile secondaire à électrolyte non aqueux selon la revendication 8, dans laquelle la couche mince de matériau actif comprend une couche mince de silicium, et l'élément azote est réparti uniformément dans la couche mince de silicium.

10. Electrode négative pour pile secondaire à électrolyte non aqueux selon la revendication 8, dans laquelle la couche mince de matériau actif présente une valeur « RSN » Raman supérieure ou égale à 0,0 et inférieure ou égale à 0,9, telle que déterminée par une analyse spectroscopique Raman.

11. Electrode négative pour pile secondaire à électrolyte non aqueux selon la revendication 8, dans laquelle la couche mince de matériau actif présente une valeur « RS » Raman supérieure ou égale à 0,4 et inférieure ou égale à 1,0, telle que déterminée par une analyse spectroscopique Raman.

12. Electrode négative pour pile secondaire à électrolyte non aqueux selon la revendication 8, dans laquelle la couche mince de matériau actif présente une valeur « XIsz » supérieure ou égale à 0,00 et inférieure ou égale à 1,10, telle que déterminée par diffraction des rayons X.

13. Electrode négative pour pile secondaire à électrolyte non aqueux selon la revendication 1, dans laquelle l'élément Z dans la formule générale SiZxMy est un bore (B), et dans laquelle la valeur de « x » dans une formule générale SiBxMy est telle que le rapport Q(Z) de concentration de Z se situe dans la plage allant de 0,30 à 0,85.

14. Electrode négative pour pile secondaire à électrolyte non aqueux selon la revendication 13, dans laquelle la couche mince de matériau actif comprend une couche mince de silicium, et l'élément bore est réparti uniformément dans la couche mince de silicium.

15. Electrode négative pour pile secondaire à électrolyte non aqueux selon la revendication 13, dans laquelle la couche mince de matériau actif présente une valeur
« XIsz » supérieure ou égale à 0,00 et inférieure ou égale à 0,90, telle que déterminée par diffraction des rayons X.

16. Procédé de production d'une électrode négative pour pile secondaire à électrolyte non aqueux, la pile secondaire comprenant un collecteur de courant et une couche mince de matériau actif adjacente au collecteur de courant, la couche mince de matériau actif contenant principalement un composé représenté par la formule générale SiZxMy, Z, M « x » et « y » satisfaisant les conditions suivantes, le procédé comprenant les étapes suivantes :

l'utilisation d'une source contenant du silicium, l'élément Z et l'élément M, la source étant choisie parmi une source pour évaporation, une source pour pulvérisation cathodique et une source pour pulvérisation thermique ; et
la réalisation des dépôts simultanés du silicium, de l'élément Z et de l'élément M selon au moins une technique choisie parmi le dépôt en phase vapeur, la pulvérisation cathodique et la pulvérisation thermique, pour ainsi déposer une couche du composé d'une épaisseur de 1 $\mu$m à 30 $\mu$m sur un substrat de collecteur de courant, dans lequel l'élément Z est au moins un élément choisi dans le groupe constitué du bore (B), du carbone (C) et de l'azote (N) ;
l'élément M est au moins un élément choisi parmi Cu, Ni et O ;
la valeur de « x » est telle qu'un rapport Q(Z) de concentration de Z se trouve dans la plage allant de 0,10 à 0,95, le rapport Q(Z) de concentration de Z étant calculé par rapport à la concentration de Z (p/(a+p)) de SiaZp selon l'équation suivante :

$$Q(Z) = [x/(1+x)]/[p/(a+p)]$$

dans laquelle SiaZp représente $SiB_3$ quand Z est B, SiC quand Z est C et SiN quand Z est N, ou si deux ou plus de deux éléments différents sont utilisés en combinaison en tant qu'élément Z, alors les rapports Q(Z) de concentration de Z sont déterminés pour chaque élément Z et le total des rapports de concentration de Z est considéré comme étant le rapport Q(Z) de concentration de Z ; et

« y » est un nombre satisfaisant la condition suivante :

$$0 \leq y \leq 0,5.$$

17. Procédé de production d'une électrode négative pour pile secondaire à électrolyte non aqueux selon la revendication 16,
dans lequel l'élément Z est un carbone (C) et « x » et « y » satisfont les conditions suivantes : $0,053 \leq x \leq 0,70$ et $0 < y \leq 0,50$ dans la formule générale SiZxMy,
dans lequel une source contenant du silicium (Si), du carbone (C) et l'élément M est utilisée sous la forme d'une source choisie parmi une source pour évaporation, une source pour pulvérisation cathodique et une source pour pulvérisation thermique, et dans lequel les dépôts du silicium, du carbone et de l'élément M sont réalisés simultanément selon au moins une technique choisie parmi le dépôt en phase vapeur, la pulvérisation cathodique et la pulvérisation thermique, pour ainsi déposer une couche du composé d'une épaisseur de 1 $\mu$m à 30 $\mu$m sur le substrat de collecteur de courant.

18. Procédé de production d'une électrode négative pour pile secondaire à électrolyte non aqueux selon la revendication 16,
dans lequel l'élément Z est un carbone (C) et « x » satisfait la condition suivante : $0,053 \leq x \leq 0,70$ et « y » est égal à zéro ou pratiquement égal à zéro dans la formule générale SiZxMy,
dans lequel une source contenant du silicium et du carbone est utilisée sous la forme d'une source choisie parmi une source pour évaporation, une source pour pulvérisation cathodique et une source pour pulvérisation thermique, et dans lequel les dépôts du silicium et du carbone sont réalisés simultanément selon au moins une technique choisie parmi le dépôt en phase vapeur, la pulvérisation cathodique et la pulvérisation thermique, pour ainsi déposer une couche du composé d'une épaisseur de 1 $\mu$m à 30 $\mu$m sur le substrat de collecteur de courant.

19. Pile secondaire à électrolyte non aqueux, comprenant une électrode positive, une électrode négative et un électrolyte, l'électrode positive et l'électrode négative étant chacune capables de bloquer/libérer des ions de lithium, dans laquelle l'électrode négative est l'électrode négative pour pile secondaire à électrolyte non aqueux selon la revendication 1.

20. Pile secondaire à électrolyte non aqueux selon la revendication 19, dans laquelle l'électrolyte comprend un électrolyte liquide non aqueux, l'électrolyte liquide non aqueux contenant un composé d'ester carbonique cyclique contenant une liaison intramoléculaire insaturée.

## Fig. 1a  SCANNING ELECTRON MICROGRAPH

## Fig. 1b WEIGHT-CONCENTRATION DISTRIBUTION OF ELEMENTS

## Fig. 2a

SCANNING ELECTRON MICROGRAPH

COPPER FOIL

$SiC_xM_y$ FILM

5 μm

## Fig. 2b

SILICON DISTRIBUTION
DETERMINED BY EPMA

SILICON CONCENTRATION

## Fig. 2c

CARBON DISTRIBUTION
DETERMINED BY EPMA

CARBON CONCENTRATION

WHITE OR BLACK SPOT INDICATES A SPECIFIC CONCENTRATION OF ELEMENT.

## Fig. 3

Iaco   Isc

DOTTED LINE: BACKGROUND

4000cm$^{-1}$          2000cm$^{-1}$

## Fig. 4a

## Fig. 4b

## Fig. 5a

COPPER FOIL
CURRENT COLLECTOR

$SiC_xM_y$ FILM

CACs SEI 15.0kV x4,000 1μm WD11mm

## Fig. 5b

COPPER FOIL
CURRENT COLLECTOR

$Si_nZ_x$ THIN FILM

Cu

Si

B

Atomic Composition (wt%)

100

0

0 1 2 3 4 5 6 7 8 9 10

Cross-sectional Distance (μm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11135115 A
- JP 7302588 A
- JP 2003007295 A
- WO 0156099 A
- JP 8138744 A

### Non-patent literature cited in the description

- Desk Handbooks Phase Diagrams for Binary Alloys. ASM International
- Raman spectrograph. JASCO Corporation